# EUROPEAN PATENT APPLICATION

(11) **EP 4 401 474 A1**
(43) Date of publication of application: **17.07.2024**
(21) Application number: 22874639.2
(22) Date of filing: 14.09.2022
(51) Int. Cl.: H04W 52/02

(54) **INFORMATION TRANSMISSION METHOD AND APPARATUS**

(30) Priority: 30.09.2021 CN 202111159592
(71) Applicant: Huawei Technologies Co., Ltd., Shenzhen, Guangdong 518129 (CN)
(72) Inventor: HUANG, Wenwen, Shenzhen, Guangdong 518129 (CN); TIE, Xiaolei, Shenzhen, Guangdong 518129 (CN); ZHANG, Zhanzhan, Shenzhen, Guangdong 518129 (CN)
(74) Representative: Isarpatent
(86) International application number: PCT/CN2022/118774
(87) International publication number: WO 2023/051252

(57) **Abstract**

Embodiments of this disclosure provide an information transmission method and an apparatus, and relate to the communication field. The method includes: A terminal device receives first indication information for monitoring combination from a network device, where the first indication information for monitoring combination indicates at least two candidate monitoring behaviors. The terminal device receives downlink control information DCI from the network device, where the DCI indicates a monitoring behavior of the terminal device, and the monitoring behavior is one of the at least two candidate monitoring behaviors. The terminal device performs a downlink control channel PDCCH monitoring behavior based on the first indication information for monitoring combination and the DCI. Therefore, in embodiments of this disclosure, the terminal device can determine the monitoring behavior based on the configured monitoring combination indication and the DCI, to effectively reduce power consumption of the terminal device and reduce implementation complexity of the terminal device.

## Description

### TECHNICAL FIELD

This disclosure relates to the communication field, and more specifically, to an information transmission method and an apparatus.

### BACKGROUND

In a wireless communication system, power consumption of a terminal device is an important aspect of user experience, and one factor that causes large power consumption of the terminal device is monitoring of a downlink control channel (e.g. Physical Downlink Control Channel, PDCCH) from a network device. Therefore, it is necessary to provide a solution to minimize unnecessary PDCCH monitoring.

### SUMMARY

Embodiments of this disclosure provide a monitoring indication solution, to reduce PDCCH monitoring by a terminal device, and further reduce power consumption.

According to a first aspect, an information transmission method is provided. The method includes: A terminal device receives first indication information for monitoring combination from a network device, where the first indication information for monitoring combination indicates at least two candidate monitoring behaviors. The terminal device receives downlink control information DCI from the network device, where the DCI indicates a monitoring behavior of the terminal device, and the monitoring behavior is one of the at least two candidate monitoring behaviors. The terminal device performs a downlink control channel (e.g. PDCCH) monitoring behavior based on the first indication information for monitoring combination and the DCI.

Therefore, in embodiments of this disclosure, the terminal device can determine the monitoring behavior based on the configured monitoring combination indication and the DCI, to effectively reduce power consumption of the terminal device and reduce implementation complexity of the terminal device.

In some embodiments of the first aspect, that a terminal device receives first indication information for monitoring combination from a network device includes: The terminal device receives the first indication information for monitoring combination from the network device. The first indication information for monitoring combination indicates one of the following: a first monitoring combination, including a first candidate monitoring behavior and a second candidate monitoring behavior; a second monitoring combination, including the second candidate monitoring behavior, a third candidate monitoring behavior, and a fourth candidate monitoring behavior; a third monitoring combination, including the second candidate monitoring behavior, the third candidate monitoring behavior, the fourth candidate monitoring behavior, and a fifth candidate monitoring behavior; a fourth monitoring combination, including the third candidate monitoring behavior and the fourth candidate monitoring behavior; or a fifth monitoring combination, including the third candidate monitoring behavior, the fourth candidate monitoring behavior, and the fifth candidate monitoring behavior. In addition, the first candidate monitoring behavior indicates to perform PDCCH monitoring based on a configured search space set, the second candidate monitoring behavior indicates to stop PDCCH monitoring within preset duration, the third candidate monitoring behavior indicates to perform PDCCH monitoring based on a search space set in a first search space set group, the fourth candidate monitoring behavior indicates to perform PDCCH monitoring based on a search space set in a second search space set group, and the fifth candidate monitoring behavior indicates to perform PDCCH monitoring based on a search space set in a third search space set group.

Therefore, each monitoring combination may include at least two candidate monitoring behaviors that are not mutually exclusive, to avoid unreasonable random indication.

In some embodiments of the first aspect, the first indication information for monitoring combination indicates the first monitoring combination, the second monitoring combination, or the third monitoring combination, and the method further includes: The terminal device receives indication information of the preset duration from the network device.

In some embodiments of the first aspect, the method further includes: The terminal device determines the monitoring behavior from the at least two candidate monitoring behaviors based on the DCI.

In some embodiments of the first aspect, the first indication information for monitoring combination indicates a monitoring combination of a first bandwidth part BWP, and the method further includes: The terminal device receives second indication information for monitoring combination from the network device, where the second indication information for monitoring combination indicates a monitoring combination of a second BWP.

Therefore, when a plurality of BWPs are configured for the terminal device, monitoring combinations may be separately configured for different BWPs, to implement flexible configuration for the different BWPs.

In some embodiments of the first aspect, the monitoring combination of the first BWP is the same as the monitoring combination of the second BWP.

In particular, for a plurality of different BWPs belonging to a same cell, a same monitoring combination may be configured for the plurality of different BWPs, to ensure consistency between different BWPs.

In some embodiments of the first aspect, the first indication information for monitoring combination indicates a monitoring combination of a first cell, and the method further includes: The terminal device receives third indication information for monitoring combination from the network device, where the third indication information for monitoring combination indicates a monitoring combination of a second cell.

Therefore, when a plurality of cells are configured for the terminal device, monitoring combinations may be separately configured for different cells, to implement flexible configuration for the different cells.

In some embodiments of the first aspect, the monitoring combination of the first cell is the same as the monitoring combination of the second cell.

In particular, for a plurality of different cells belonging to a same cell group, a same monitoring combination may be configured for the plurality of different cells, to ensure consistency between different cells.

In some embodiments of the first aspect, the method further includes: The terminal device sends supported monitoring combination information to the network device, where the supported monitoring combination information indicates a monitoring combination supported by the terminal device.

Therefore, the terminal device may notify the network device of the supported monitoring combination, to ensure that the monitoring combination indicated by the first indication information for monitoring combination sent by the network device is supported by the terminal device, and ensure information accuracy.

In some embodiments of the first aspect, the monitoring behavior is used for a type 3 common search space set and a terminal device-specific search space set.

According to a second aspect, an information transmission method is provided. The method includes: A network device sends first indication information for monitoring combination to a terminal device, where the first indication information for monitoring combination indicates at least two candidate monitoring behaviors. The network device sends downlink control information DCI to the terminal device, so that the terminal device performs a downlink control channel (e.g.PDCCH) monitoring behavior based on the first indication information for monitoring combination and the DCI. The monitoring behavior is one of the at least two candidate monitoring behaviors.

In some embodiments of the second aspect, that a network device sends first indication information for monitoring combination to a terminal device includes: The network device sends the first indication information for monitoring combination to the terminal device. The first indication information for monitoring combination indicates one of the following: a first monitoring combination, including a first candidate monitoring behavior and a second candidate monitoring behavior; a second monitoring combination, including the second candidate monitoring behavior, a third candidate monitoring behavior, and a fourth candidate monitoring behavior; a third monitoring combination, including the second candidate monitoring behavior, the third candidate monitoring behavior, the fourth candidate monitoring behavior, and a fifth candidate monitoring behavior; a fourth monitoring combination, including the third candidate monitoring behavior and the fourth candidate monitoring behavior; or a fifth monitoring combination, including the third candidate monitoring behavior, the fourth candidate monitoring behavior, and the fifth candidate monitoring behavior. In addition, the first candidate monitoring behavior indicates to perform PDCCH monitoringbased on a configured search space set, the second candidate monitoring behavior indicates to stop PDCCH monitoringwithin preset duration, the third candidate monitoring behavior indicates to perform PDCCH monitoring based on a search space set in a first search space set group, the fourth candidate monitoring behavior indicates to perform PDCCH monitoring based on a search space set in a second search space set group, and the fifth candidate monitoring behavior indicates to perform PDCCH monitoring based on a search space set in a third search space set group.

In some embodiments of the second aspect, the first indication information for monitoring combination indicates the first monitoring combination, the second monitoring combination, or the third monitoring combination, and the method further includes: The network device sends indication information of the preset duration to the terminal device.

In some embodiments of the second aspect, the first indication information for monitoring combination indicates a monitoring combination of a first bandwidth part BWP, and the method further includes: The network device sends second indication information for monitoring combination to the terminal device, where the second indication information for monitoring combination indicates a monitoring combination of a second BWP.

In some embodiments of the second aspect, the monitoring combination of the first BWP is the same as the monitoring combination of the second BWP.

In some embodiments of the second aspect, the first indication information for monitoring combination indicates a monitoring combination of a first cell, and the method further includes: The network device sends third indication information for monitoring combination to the terminal device, where the third indication information for monitoring combination indicates a monitoring combination of a second cell.

In some embodiments of the second aspect, the monitoring combination of the first cell is the same as the monitoring combination of the second cell.

In some embodiments of the second aspect, the method further includes: The network device receives supported monitoring combination information from the terminal device, where the supported monitoring combination information indicates a monitoring combination supported by the terminal device, and a monitoring combination indicated by the first indication information for monitoring combination belongs to the monitoring combination supported by the terminal device.

In some embodiments of the second aspect, the monitoring behavior is used for a type 3 common search space set and a terminal device-specific search space set.

According to a third aspect, a communication apparatus is provided. The apparatus includes: a first receiving module, configured to receive first indication information for monitoring combination from a network device, where the first indication information for monitoring combination indicates at least two candidate monitoring behaviors; a second receiving module, configured to receive downlink control information DCI from the network device, where the DCI indicates a monitoring behavior of the communication apparatus, and the monitoring behavior is one of the at least two candidate monitoring behaviors; and an execution module, configured to perform a downlink control channel (e.g.PDCCH) monitoring behavior based on the first indication information for monitoring combination and the DCI.

In some embodiments of the third aspect, the first receiving module is configured to receive the first indication information for monitoring combination from the network device. The first indication information for monitoring combination indicates one of the following: a first monitoring combination, including a first candidate monitoring behavior and a second candidate monitoring behavior; a second monitoring combination, including the second candidate monitoring behavior, a third candidate monitoring behavior, and a fourth candidate monitoring behavior; a third monitoring combination, including the second candidate monitoring behavior, the third candidate monitoring behavior, the fourth candidate monitoring behavior, and a fifth candidate monitoring behavior; a fourth monitoring combination, including the third candidate monitoring behavior and the fourth candidate monitoring behavior; or a fifth monitoring combination, including the third candidate monitoring behavior, the fourth candidate monitoring behavior, and the fifth candidate monitoring behavior. In addition, the first candidate monitoring behavior indicates to perform PDCCH monitoring based on a configured search space set, the second candidate monitoring behavior indicates to stop PDCCH monitoring within preset duration, the third candidate monitoring behavior indicates to perform PDCCH monitoring based on a search space set in a first search space set group, the fourth candidate monitoring behavior indicates to perform PDCCH monitoring based on a search space set in a second search space set group, and the fifth candidate monitoring behavior indicates to perform PDCCH monitoring based on a search space set in a third search space set group.

In some embodiments of the third aspect, the first indication information for monitoring combination indicates the first monitoring combination, the second monitoring combination, or the third monitoring combination, and the communication apparatus further includes a third receiving module, configured to receive indication information of the preset duration from the network device.

In some embodiments of the third aspect, the apparatus further includes a determining module, configured to determine the monitoring behavior from the at least two candidate monitoring behaviors based on the DCI.

In some embodiments of the third aspect, the first indication information for monitoring combination indicates a monitoring combination of a first bandwidth part BWP, and the first receiving module is further configured to receive second indication information for monitoring combination from the network device, where the second indication information for monitoring combination indicates a monitoring combination of a second BWP.

In some embodiments of the third aspect, the monitoring combination of the first BWP is the same as the monitoring combination of the second BWP.

In some embodiments of the third aspect, the first indication information for monitoring combination indicates a monitoring combination of a first cell, and the first receiving module is further configured to receive third indication information for monitoring combination from the network device, where the third indication information for monitoring combination indicates a monitoring combination of a second cell.

In some embodiments of the third aspect, the monitoring combination of the first cell is the same as the monitoring combination of the second cell.

In some embodiments of the third aspect, the apparatus further includes a sending module, configured to send supported monitoring combination information to the network device, where the supported monitoring combination information indicates a monitoring combination supported by the communication apparatus.

In some embodiments of the third aspect, the monitoring behavior is used for a type 3 common search space set and a terminal device-specific search space set.

According to a fourth aspect, a communication apparatus is provided. The apparatus includes: a first sending module, configured to send first indication information for monitoring combination to a terminal device, where the first indication information for monitoring combination indicates at least two candidate monitoring behaviors; and a second sending module, configured to send downlink control information DCI to the terminal device, so that the terminal device performs a downlink control channel (e.g.PDCCH) monitoring behavior based on the first indication information for monitoring combination and the DCI. The monitoring behavior is one of the at least two candidate monitoring behaviors.

In some embodiments of the fourth aspect, the first sending module is configured to send the first indication information for monitoring combination to the terminal device. The first indication information for monitoring combination indicates one of the following: a first monitoring combination, including a first candidate monitoring behavior and a second candidate monitoring behavior; a second monitoring combination, including the second candidate monitoring behavior, a third candidate monitoring behavior, and a fourth candidate monitoring behavior; a third monitoring combination, including the second candidate monitoring behavior, the third candidate monitoring behavior, the fourth candidate monitoring behavior, and a fifth candidate monitoring behavior; a fourth monitoring combination, including the third candidate monitoring behavior and the fourth candidate monitoring behavior; or a fifth monitoring combination, including the third candidate monitoring behavior, the fourth candidate monitoring behavior, and the fifth candidate monitoring behavior. In addition, the first candidate monitoring behavior indicates to perform PDCCH monitoring based on a configured search space set, the second candidate monitoring behavior indicates to stop PDCCH monitoringwithin preset duration, the third candidate monitoring behavior indicates to PDCCH monitoringbased on a search space set in a first search space set group, the fourth candidate monitoring behavior indicates to perform PDCCH monitoring based on a search space set in a second search space set group, and the fifth candidate monitoring behavior indicates to perform PDCCH monitoring based on a search space set in a third search space set group.

In some embodiments of the fourth aspect, the first indication information for monitoring combination indicates the first monitoring combination, the second monitoring combination, or the third monitoring combination, and the communication apparatus further includes a third sending module, configured to send indication information of the preset duration to the terminal device.

In some embodiments of the fourth aspect, the first indication information for monitoring combination indicates a monitoring combination of a first bandwidth part BWP, and the first sending module is further configured to send a second indication information for monitoring combination to the terminal device, where the second indication information for monitoring combination indicates a monitoring combination of a second BWP.

In some embodiments of the fourth aspect, the monitoring combination of the first BWP is the same as the monitoring combination of the second BWP.

In some embodiments of the fourth aspect, the first indication information for monitoring combination indicates a monitoring combination of a first cell, and the first sending module is further configured to send a third indication information for monitoring combination to the terminal device, where the third indication information for monitoring combination indicates a monitoring combination of a second cell.

In some embodiments of the fourth aspect, the monitoring combination of the first cell is the same as the monitoring combination of the second cell.

In some embodiments of the fourth aspect, the apparatus further includes a receiving module, configured to receive supported monitoring combination information from the terminal device, where the supported monitoring combination information indicates a monitoring combination supported by the terminal device, and a monitoring combination indicated by the first indication information for monitoring combination belongs to the monitoring combination supported by the terminal device.

In some embodiments of the fourth aspect, the monitoring behavior is used for a type 3 common search space set and a terminal device-specific search space set.

According to a fifth aspect, a terminal device is provided. The terminal device includes a transceiver, a processor, and a memory. The memory stores instructions executed by the processor. When the instructions are executed by the processor, the terminal device is enabled to: receive, by using the transceiver, first indication information for monitoring combination from a network device, where the first indication information for monitoring combination indicates at least two candidate monitoring behaviors; receive, by using the transceiver, downlink control information DCI from the network device, where the DCI indicates a monitoring behavior of the terminal device, and the monitoring behavior is one of the at least two candidate monitoring behaviors; and perform a downlink control channel (e.g. PDCCH) monitoring behavior based on the first indication information for monitoring combination and the DCI.

In some embodiments of the fifth aspect, the processor executes the instructions to enable the terminal device to receive, by using the transceiver, the first indication information for monitoring combination from the network device. The first indication information for monitoring combination indicates one of the following: a first monitoring combination, including a first candidate monitoring behavior and a second candidate monitoring behavior; a second monitoring combination, including the second candidate monitoring behavior, a third candidate monitoring behavior, and a fourth candidate monitoring behavior; a third monitoring combination, including the second candidate monitoring behavior, the third candidate monitoring behavior, the fourth candidate monitoring behavior, and a fifth candidate monitoring behavior; a fourth monitoring combination, including the third candidate monitoring behavior and the fourth candidate monitoring behavior; or a fifth monitoring combination, including the third candidate monitoring behavior, the fourth candidate monitoring behavior, and the fifth candidate monitoring behavior. In addition, the first candidate monitoring behavior indicates to perform PDCCH monitoring based on a configured search space set, the second candidate monitoring behavior indicates to stop PDCCH monitoring within preset duration, the third candidate monitoring behavior indicates to perform PDCCH monitoring based on a search space set in a first search space set group, the fourth candidate monitoring behavior indicates to perform PDCCH monitoring based on a search space set in a second search space set group, and the fifth candidate monitoring behavior indicates to perform PDCCH monitoring based on a search space set in a third search space set group.

In some embodiments of the fifth aspect, the first indication information for monitoring combination indicates the first monitoring combination, the second monitoring combination, or the third monitoring combination, and the processor executes the instructions to enable the terminal device to receive, by using the transceiver, indication information of the preset duration from the network device.

In some embodiments of the fifth aspect, the processor executes the instructions to enable the terminal device to determine the monitoring behavior from the at least two candidate monitoring behaviors based on the DCI.

In some embodiments of the fifth aspect, the first indication information for monitoring combination indicates a monitoring combination of a first bandwidth part BWP, and the processor executes the instructions to enable the terminal device to receive, by using the transceiver, second indication information for monitoring combination from the network device, where the second indication information for monitoring combination indicates a monitoring combination of a second BWP.

In some embodiments of the fifth aspect, the monitoring combination of the first BWP is the same as the monitoring combination of the second BWP.

In some embodiments of the fifth aspect, the first indication information for monitoring combination indicates a monitoring combination of a first cell, and the processor executes the instructions to enable the terminal device to receive, by using the transceiver, third indication information for monitoring combination from the network device, where the third indication information for monitoring combination indicates a monitoring combination of a second cell.

In some embodiments of the fifth aspect, the monitoring combination of the first cell is the same as the monitoring combination of the second cell.

In some embodiments of the fifth aspect, the processor executes the instructions to enable the terminal device to send supported monitoring combination information to the network device, where the supported monitoring combination information indicates a monitoring combination supported by the terminal device.

In some embodiments of the fifth aspect, the monitoring behavior is used for a type 3 common search space set and a terminal device-specific search space set.

According to a sixth aspect, a network device is provided. The network device includes a transceiver, a processor, and a memory. The memory stores instructions executed by the processor. When the instructions are executed by the processor, the network device is enabled to: send, by using the transceiver, first indication information for monitoring combination to a terminal device, where the first indication information for monitoring combination indicates at least two candidate monitoring behaviors; send, by using the transceiver, downlink control information DCI to the terminal device, so that the terminal device performs a downlink control channel (e.g.PDCCH) monitoring behavior based on the first indication information for monitoring combination and the DCI. The monitoring behavior is one of the at least two candidate monitoring behaviors.

In some embodiments of the sixth aspect, the processor executes the instructions to enable the network device to send, by using the transceiver, the first indication information for monitoring combination to the terminal device. The first indication information for monitoring combination indicates one of the following: a first monitoring combination, including a first candidate monitoring behavior and a second candidate monitoring behavior; a second monitoring combination, including the second candidate monitoring behavior, a third candidate monitoring behavior, and a fourth candidate monitoring behavior; a third monitoring combination, including the second candidate monitoring behavior, the third candidate monitoring behavior, the fourth candidate monitoring behavior, and a fifth candidate monitoring behavior; a fourth monitoring combination, including the third candidate monitoring behavior and the fourth candidate monitoring behavior; or a fifth monitoring combination, including the third candidate monitoring behavior, the fourth candidate monitoring behavior, and the fifth candidate monitoring behavior. In addition, the first candidate monitoring behavior indicates to perform PDCCH monitoring based on a configured search space set, the second candidate monitoring behavior indicates to stop PDCCH monitoring within preset duration, the third candidate monitoring behavior indicates to perform PDCCH monitoring based on a search space set in a first search space set group, the fourth candidate monitoring behavior indicates to perform PDCCH monitoring based on a search space set in a second search space set group, and the fifth candidate monitoring behavior indicates to perform PDCCH monitoring based on a search space set in a third search space set group.

In some embodiments of the sixth aspect, the first indication information for monitoring combination indicates the first monitoring combination, the second monitoring combination, or the third monitoring combination, and the processor executes the instructions to enable the network device to send, by using the transceiver, indication information of the preset duration to the terminal device.

In some embodiments of the sixth aspect, the first indication information for monitoring combination indicates a monitoring combination of a first bandwidth part BWP, and the processor executes the instructions to enable the network device to send, by using the transceiver, second indication information for monitoring combination to the terminal device, where the second indication information for monitoring combination indicates a monitoring combination of a second BWP.

In some embodiments of the sixth aspect, the monitoring combination of the first BWP is the same as the monitoring combination of the second BWP.

In some embodiments of the sixth aspect, the first indication information for monitoring combination indicates a monitoring combination of a first cell, and the processor executes the instructions to enable the network device to send, by using the transceiver, third indication information for monitoring combination to the terminal device, where the third indication information for monitoring combination indicates a monitoring combination of a second cell.

In some embodiments of the sixth aspect, the monitoring combination of the first cell is the same as the monitoring combination of the second cell.

In some embodiments of the sixth aspect, the processor executes the instructions to enable the network device to receive, by using the transceiver, supported monitoring combination information from the terminal device, where the supported monitoring combination information indicates a monitoring combination supported by the terminal device, and a monitoring combination indicated by the first indication information for monitoring combination belongs to the monitoring combination supported by the terminal device.

In some embodiments of the sixth aspect, the monitoring behavior is used for a type 3 common search space set and a terminal device-specific search space set.

According to a seventh aspect, a computer-readable storage medium is provided. The computer-readable storage medium stores computer-executable instructions, and when the computer-executable instructions are executed by a processor, an operation based on the method in any one of the first aspect or the embodiments of the first aspect is implemented, or an operation based on the method in any one of the second aspect or the embodiments of the second aspect is implemented.

According to an eighth aspect, a chip or a chip system is provided. The chip or the chip system includes a processing circuit configured to perform an operation based on the method in any one of the first aspect or the embodiments of the first aspect or an operation based on the method in any one of the second aspect or the embodiments of the second aspect.

According to a ninth aspect, a computer program or a computer program product is provided. The computer program or the computer program product is tangibly stored in a computer-readable medium, and includes computer-executable instructions. When the computer-executable instructions are executed, an operation based on the method in any one of the first aspect or the embodiments of the first aspect is implemented, or an operation based on the method in any one of the second aspect or the embodiments of the second aspect is implemented.

### BRIEF DESCRIPTION OF DRAWINGS

The foregoing and other features, advantages, and aspects of embodiments of this disclosure become more apparent in conjunction with the accompanying drawings and with reference to the following detailed descriptions. In the accompanying drawings, same or similar reference numerals represent same or similar elements.
FIG. 1 is a schematic diagram of PDCCH monitoring;
FIG. 2 is a schematic diagram of skipping PDCCH monitoring;
FIG. 3 is a schematic diagram of grouping four search space sets;
FIG. 4 is a schematic diagram of a communication system in which an embodiment of this disclosure can be implemented;
FIG. 5 is a diagram of signaling interaction of a process between a terminal device and a network device according to some embodiments of this disclosure;
FIG. 6 is a schematic block diagram of a communication apparatus for information transmission according to some embodiments of this disclosure;
FIG. 7 is another schematic block diagram of a communication apparatus for information transmission according to some embodiments of this disclosure; and
FIG. 8 is a schematic block diagram of an example device that may be used to implement an embodiment of this disclosure.

### DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure may be implemented in various forms, and should not be construed as being limited to the embodiments described herein. On the contrary, these embodiments are provided, so that this disclosure is thoroughly and completely understood. It should be understood that the accompanying drawings and embodiments of this disclosure are merely used as examples, but are not intended to limit the protection scope of this disclosure.

In descriptions of embodiments of this disclosure, the term "include" and similar terms thereof should be understood as open inclusion, that is, "include but are not limited to". The term "based" should be understood as "at least partially based". The terms "one embodiment" or "this embodiment" should be understood as "at least one embodiment". The terms "first", "second", and the like may indicate different or same objects. Other explicit and implicit definitions may also be included below.

Embodiments of this disclosure may be implemented according to any appropriate communication protocol that includes but is not limited to: 3rd generation, (3rd Generation, 3G), 4th generation (4G), 5th generation (5G), 6th generation (6G), and another cellular communication protocols, a wireless local area network communication protocol, for example, the Institute of Electrical and Electronics Engineers (Institute of Electrical and Electronics Engineers, IEEE) 802.11, and/or any other protocol currently known or developed in the future.

Technical solutions of embodiments of this disclosure is applied to a communication system that complies with any appropriate communication protocol, for example, a general packet radio service (General Packet Radio Service, GPRS), a global system for mobile communications (Global System for Mobile Communications, GSM), an enhanced data rate for GSM evolution (Enhanced Data rate for GSM Evolution, EDGE) system, a universal mobile telecommunications service (Universal Mobile Telecommunications Service, UMTS) system, a long term evolution (Long Term Evolution, LTE) system, a wideband code division multiple access (Wideband Code Division Multiple Access, WCDMA) system, a code division multiple access 2000 (Code Division Multiple Access, CDMA 2000) system, a time division synchronous code division multiple access (Time Division Synchronous Code Division Multiple Access, TD-SCDMA) system, a frequency division duplex (Frequency Division Duplex, FDD) system, a time division duplex (Time Division Duplex, TDD) system, a 5th generation (5G) system, or a new radio (New Radio, NR) system, a 6th generation (6G) system, and the like.

For purposes of illustration, embodiments of this disclosure are described below in context of an NR communication system in the 3GPP. However, it should be understood that embodiments of this disclosure are not limited to the communication system, but may be applied to any communication system that has a similar problem, for example, a wireless local area network (WLAN), a wired communication system, or another communication system developed in the future.

The term "terminal device" used in this disclosure means any terminal device that can perform wired or wireless communication with a network device or with another terminal device. The terminal device may sometimes be referred to as user equipment (User Equipment, UE). The terminal device may be any type of mobile terminal, fixed terminal, or portable terminal. For example, the terminal device may include a mobile phone, a station, a unit, a device, a mobile terminal (Mobile Terminal, MT), a subscription platform, a portable subscription platform, an Internet node, a communicator, a desktop computer, a laptop computer, a notebook computer, a tablet computer, a personal communication system device, a personal navigation device, a personal digital assistant (Personal Digital Assistant, PDA), a positioning device, a radio broadcast receiver, an e-book device, a game device, an Internet of things (Internet of Things, IoT) device, a vehicle-mounted device, an aircraft, a virtual reality (Virtual Reality, VR) device, an augmented reality (Augmented Reality, an AR) device, a wearable device, a terminal device in a 5G network, any terminal device in an evolved public land mobile network (Public Land Mobile Network, PLMN), another device that can be used for communication, or any combination thereof. This is not limited in embodiments of this disclosure.

The term "network device" used in this disclosure is an entity or a node, for example, an access network device, that may be configured to communicate with the terminal device. The access network device may be an apparatus, for example, a radio access network (Radio Access Network, RAN) device deployed in a radio access network to provide a wireless communication function for the mobile terminal. The access network device may include various types of base stations. For example, the access network device may include a macro base station, a micro base station, a pico base station, a femto base station, a relay station, an access point, a remote radio unit (Remote Radio Unit, RRU), a radio head (Radio Head, RH), a remote radio head (Remote Radio Head, RRH), and the like in various forms. In systems that use different radio access technologies, names of access network devices may be different. For example, the access network device is referred to as an evolved NodeB (evolved NodeB, eNB or eNodeB) in a long term evolution (Long Term Evolution, LTE) network, referred to as a NodeB (NodeB, NB) in a 3G network, referred to as a gNodeB (gNB) or an NR NodeB (NR NB) in a 5G network, and the like. In some scenarios, the access network device may include a central unit (Central Unit, CU) and/or a distributed unit (Distributed Unit, DU). The CU and DU can be placed in different places. For example, the DU is remotely placed in a high-traffic area, and the CU is placed in a central equipment room. Alternatively, the CU and the DU may be placed in a same equipment room. Alternatively, the CU and the DU may be different components in a same rack. For ease of description, in subsequent embodiments of this disclosure, the foregoing apparatuses that provide a wireless communication function for the terminal device are collectively referred to as network devices. This is not specifically limited in embodiments of this disclosure.

A physical downlink channel corresponds to a set of resource elements (Resource Element, RE) that carry information from a higher layer. A PDCCH is a physical downlink channel that carries scheduling information and other control information. The PDCCH may carry scheduling information of uplink data and/or downlink data, and the terminal device may periodically perform PDCCH monitoring, to obtain the scheduling information. If the terminal device obtains the scheduling information through monitoring, the terminal device may further receive the downlink data through a physical downlink shared channel (Physical Downlink Shared Channel, PDSCH), or send the uplink data through a physical uplink shared channel (Physical Uplink Shared Channel, PUSCH) based on the scheduling information. The PDCCH may further carry information such as an uplink power control command word and a slot format. PDCCHs that carry different control information may be scrambled by using different radio network temporary identifiers (Radio Network Temporary Identifier, RNTI).

It should be noted that monitoring (monitoring) performed by the terminal device on the PDCCH may also be referred to as listening (listening), detecting (detecting), or the like. This term is not limited in embodiments of this disclosure.

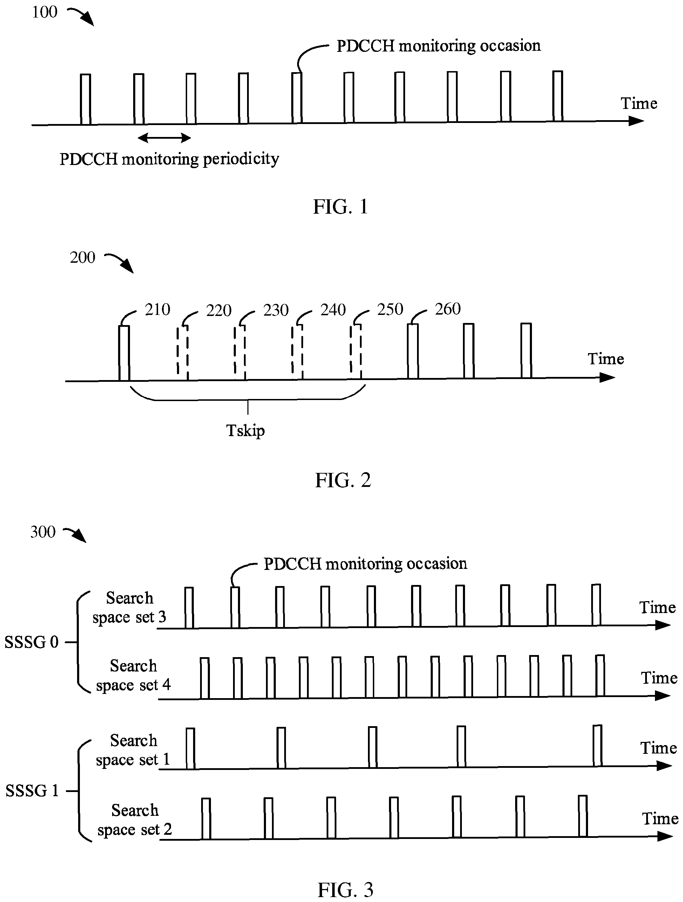

The PDCCH is transmitted on an aggregation of one or more consecutive control channel elements (Control Channel Element, CCE), and one CCE may correspond to six resource element groups (Resource Element Group, REG). The network device may configure at least one search space set (Search Space Set, SSS) for the terminal device, and one search space set may be used to define a group of candidate PDCCHs. The terminal device may determine a PDCCH monitoring occasion (Monitoring Occasion, MO) based on configuration information of the search space set, and may further perform PDCCH monitoring on the determined PDCCH monitoring occasion, as shown in FIG. 1. The PDCCH monitoring occasion may also be referred to as a PDCCH candidate location.

The configuration information of the search space set may include at least one of the following:
(1) identification information, of a search space set, used to identify the search space set;
(2) identification information of a control resource set (control resource set, CORESET) associated with the search space set, where the CORESET indicates a time-frequency resource set used to carry the PDCCH; and one CORESET includes several consecutive or non-consecutive resource blocks (Resource Block, RB) in frequency domain, and includes one or more consecutive symbols in time domain;
(3) a PDCCH monitoring periodicity (for example, represented by Ks) and offset (for example, represented by Os), where dimensions of Ks and Os may be a slot (slot), or optionally, the dimension of Os may be a symbol;
(4) a PDCCH monitoring pattern (pattern) within a slot, where the PDCCH monitoring pattern within a slot is also referred to as a PDCCH monitoring symbol within a slot, and indicates a start symbol of the CORESET, associated with the search space set, within a slot for PDCCH monitoring;
(5) duration (for example, represented by Ts), where the duration indicates a quantity of consecutive slots that the search space set exists, Ts is less than Ks, and a value of Ts may be one slot;
(6) an aggregation level and a quantity of PDCCH candidates (PDCCH candidates) corresponding to each aggregation level; and
(7) search space set type indication information, where the search space set type indication information indicates whether the search space set is a common search space set (Common Search Space set, CSS set) or a user equipment-specific search space set (UE-specific Search Space set, USS set). For example, the common search space set may be referred to as a CSS, and the user equipment-specific search space set may be referred to as a USS.

For example, the common search space set includes a type-3 common search space (type-3 CSS) set that may be mainly used to monitor a PDCCH that carries DCI scrambled by any one of the following radio network temporary identifiers (Radio Network Temporary Identifier, RNTI): an interruption-RNTI (Interruption-RNTI, INT-RNTI), a slot format indication-RNTI (Slot Format Indication-RNTI, SFI-RNTI), a transmit power control-physical uplink shared channel-RNTI (Transmit Power Control-Physical Uplink Shared Channel-RNTI, TPC-PUSCH-RNTI), a transmit power control-physical uplink control channel-RNTI (Transmit Power Control-Physical Uplink Control Channel-RNTI, TPC-PUCCH-RNTI), a transmit power control-sounding reference signal-RNTI (Transmit Power Control-Sounding Reference Signal-RNTI, TPC-SRS-RNTI), a cancellation indication-RNTI (Cancellation Indication-RNTI, CI-RNTI), a cell-RNTI (Cell-RNTI, C-RNTI) on a primary cell, a modulation and coding scheme-C-RNTI (Modulation and Coding Scheme-Cell-RNTI, MCS-C-RNTI), a configured scheduling-RNTI (Configured Scheduling-RNTI, CS-RNTI), a power saving-RNTI (Power Saving-RNTI, PS-RNTI), or the like.

For example, the user equipment-specific search space set may be used to monitor a PDCCH that carries DCI scrambled by any one of the following RNTIs: a C-RNTI, an MCS-C-RNTI, a semi-persistent-channel state indication-RNTI (Semi-Persistent-Channel State Indication-RNTI, SP-CSI-RNTI), a CS-RNTI, a side link-RNTI (Side Link-RNTI, SL-RNTI), an SL-CS-RNTI, a side link semi-persistent scheduling vehicle-RNTI (SL Semi-Persistent Scheduling V-RNTI), and the like.

In addition, if a type of the search space set is the CSS, the network device further configures a downlink control information (Downlink Control Information, DCI) format (format), for example, DCI format 0_0, DCI format 1_0, DCI format 2_0, DCI format 2_1, DCI format 2_2, DCI format 2_3, DCI format 2_4, DCI format 2_5, or DCI format 2_6, monitored at the PDCCH candidate location. If the type of the search space set is the USS, the network device further configures the DCI format, for example, DCI format 0_0, DCI format 1_0, DCI format 0_1, DCI format 1_1, DCI format 0_2, DCI format 1_2, DCI format 3_0, or DCI format 3_1, monitored at the PDCCH candidate location. For example, different usage corresponding to different DCI formats is shown in Table 1. However, it should be understood that Table 1 is merely an example, and there may be more or fewer types of DCI formats in an actual scenario. In some scenarios, a DCI format may have different usage from that in Table 1.

Therefore, the terminal device may perform PDCCH monitoring based on the configuration information of the search space set. Specifically, the terminal device may monitor, based on the PDCCH monitoring periodicity and offset, the PDCCH monitoring pattern within a slot, and the like included in the configuration information of the search space set, the PDCCH on the CORESET associated with the search space set.

**Table 1**

| DCI format | Usage |
|---|---|
| 0_0 | Schedule a PUSCH in one cell |
| 0_1 | Schedule one or more PUSCHs in one cell, or indicate configured grant PUSCH downlink feedback information (CG-DFI) |
| 0_2 | Schedule a PUSCH in one cell |
| 1_0 | Schedule a PDSCH in one cell |
| 1_1 | Schedule a PDSCH in one cell, and/or trigger a HARQ-ACK codebook feedback |
| 1_2 | Schedule a PDSCH in one cell |
| 2_0 | Notify a group of UEs of a slot format, an available RB set, COT duration, and search space set group switching |
| 2_1 | Notify a group of UEs of a PRB and an OFDM symbol where the UE may assume no transmission is intended for the UE |
| 2_2 | Transmit TPC commands for a PUCCH and the PUSCH |
| 2_3 | Transmit a group of TPC commands for SRS transmissions by one or more UEs |
| 2_4 | Notify a group of UEs of a PRB and an OFDM symbol where UE cancels a corresponding UL transmission from the UE |
| 2_5 | Notify availability of a soft resource, as defined in Section 9.3.1 in TS 38.473 |
| 2_6 | Notify power saving information outside DRX active time for one or more UEs |
| 3_0 | Schedule an NR sidelink in one cell |
| 3_1 | Schedule an LTE sidelink in one cell |

It can be learned that the terminal device may periodically perform PDCCH monitoring based on the PDCCH monitoring periodicity. However, when there is no to-be-transmitted service between the network device and the terminal device, periodic monitoring of the terminal device causes a waste of power consumption. To reduce power consumption of the terminal device, unnecessary PDCCH monitoring may be reduced as much as possible by using a mechanism of skipping PDCCH monitoring or a search space set group switching mechanism.

### Mechanism of skipping (skip) PDCCH monitoring

Specifically, the network device may indicate, by using DCI, the terminal device to skip PDCCH monitoring in subsequent duration (or to stop PDCCH monitoring in duration, or not to perform PDCCH monitoring in duration).

FIG. 2 is a schematic diagram of skipping PDCCH monitoring 200. Refer to FIG. 2. It is assumed that on a PDCCH monitoring occasion 210, the terminal device obtains the DCI from the network device by PDCCH monitoring, and the DCI indicates the terminal device to skip PDCCH monitoring in subsequent duration (represented by Tskip). In this case, the terminal device does not perform PDCCH monitoring on 220 to 250 in Tskip, but continues to perform PDCCH monitoring on a PDCCH monitoring occasion 260 after Tskip. It may be understood that 220 to 250 in FIG. 2 are PDCCH monitoring occasions on which monitoring is skipped and determined based on the configuration information of the search space set.

In addition, for example, the skipped duration (skipped duration) Tskip may be indicated by using the DCI, and/or configured by using radio resource control (Radio Resource Control, RRC) signaling, or predefined by using a protocol. For example, the RRC signaling may be used to configure values of a plurality of pieces of skipped duration, and indicate, by using the DCI, one of the plurality of values as current skipped duration.

It should be noted that skipping PDCCH monitoring includes skipping PDCCH monitoring on a type 3 common search space set and skipping PDCCH monitoring on the user equipment-specific search space set. For another type of common search space set, for example, type 0, type 0A, type 1, and type 2 common search space sets, the terminal device may skip or not skip PDCCH monitoring with DCI scrambled by a C-RNTI, an MCS-C-RNTI, or a CS-RNTI. This is not limited in embodiments of this disclosure. For the type 0, type 0A, type 1, and type 2 common search space sets, whether the terminal device performs PDCCH monitoring with DCI scrambled by an SI-RNTI, an RA-RNTI, a TC-RNTI, or a P-RNTI is not limited in embodiments of this disclosure.

The type 0 and type 0A common search space sets may be used to perform PDCCH monitoring with DCI scrambled by a system information-RNTI (System Information-RNTI, SI-RNTI). The type-1 common search space set may be used to perform PDCCH monitoring with DCI scrambled by a random access-RNTI (Random Access-RNTI, RA-RNTI), a message B-RNTI (MessageB-RNTI, MsgB-RNTI), or a temporary cell-RNTI (Temporary Cell-RNTI, TC-RNTI). The type 2 common search space set may be used to perform PDCCH monitoring with DCI scrambled by a paging-RNTI (Paging-RNTI, P-RNTI). For the type 0, type 0A, type 1, and type 2 common search space sets, in a slot in which the terminal device performs PDCCH monitoring with the DCI scrambled by the SI-RNTI, the RA-RNTI, the MsgB-RNTI, or the P-RNTI, the terminal device may perform PDCCH monitoring with the DCI (DCI format 0_0 and DCI format 1_0) scrambled by the C-RNTI, the MCS-C-RNTI, or the CS-RNTI.

In this way, the terminal device can enter a sleep state by skipping PDCCH monitoring in the duration Tskip, to reduce power consumption.

It should be noted that skipping, by the terminal device, PDCCH monitoring may also be referred to as stopping (stop) PDCCH monitoring, not performing PDCCH monitoring, or the like. This term is not limited in embodiments of this disclosure.

### Search space set group (Search Space Set Group, SSSG) switching mechanism

Refer to the part with reference to FIG. 1. For one downlink bandwidth part (Bandwidth Part, BWP), the network device may configure a plurality of search space sets (SS set) for the terminal device. Further, the plurality of search space sets may be grouped, for example, grouped into two groups, three groups, or more groups.

When the search space sets are grouped, the configuration information of the search space set may further include indication information indicating an SSSG to which the search space set belongs. For example, it is assumed that search space sets in one downlink BWP are grouped into two groups: an SSSG 0 and an SSSG 1. The indication information may indicate whether the search space set belongs to the first group (SSSG 0) or the second group (SSSG 1). For example, it is assumed that the search space sets are grouped into three groups: an SSSG 0, an SSSG 1, and an SSSG 2. The indication information may indicate whether the search space set belongs to the first group (SSSG 0), the second group (SSSG 1), or the third group (SSSG 2). In this way, the terminal device only needs to perform PDCCH monitoring based on the search space set in the indicated SSSG. This can reduce a quantity of times of performing PDCCH monitoring, and reduce power consumption. It may be understood that a specific search space set may belong to two or three different SSSGs at the same time.

It may be understood that for an SS set that is not grouped, the terminal device still performs PDCCH monitoring based on the configuration information of the SS set. This is not limited in embodiments of this disclosure.

FIG. 3 is a schematic diagram of grouping 300 of four search space sets in one downlink BWP. Refer to FIG. 3. The four search space sets may be grouped, based on a sparsity degree of a PDCCH monitoring periodicity, into two groups: an SSSG 0 and an SSSG 1. The SSSG 0 includes a search space set 3 and a search space set 4, and the SSSG 1 includes a search space set 1 and a search space set 2.

For example, it is assumed that the search space set group indicated to the terminal device is the SSSG 1, the terminal device may perform PDCCH monitoring based on the search space set 1 and the search space set 2 that belong to the SSSG 1, and does not need to perform PDCCH monitoring based on the search space set 3 and the search space set 4. Because a PDCCH monitoring periodicity of the search space set belonging to the SSSG 1 is sparser, a quantity of times of monitoring can be reduced, and power consumption can be reduced.

Optionally, the network device may further indicate the terminal device to switch the search space set group. For example, the network device may explicitly indicate SSSG switching by using a bit field in the DCI or implicitly indicate SSSG switching by using the DCI.

For example, it is assumed that search space sets are grouped into two groups: an SSSG 0 and an SSSG 1. An explicit indication manner may be as follows: A specific bit field in the DCI is "0", to indicate the terminal device to perform PDCCH monitoring based on the search space set belonging to the SSSG 0. A specific bit field in the DCI is "1", to indicate the terminal device to perform PDCCH monitoring based on the search space set belonging to the SSSG 1. Alternatively, the explicit indication manner may be as follows: A specific bit field in the DCI is "0", to indicate the terminal device to perform PDCCH monitoring based on a search space set belonging to a current SSSG, that is, SSSG switching is not performed. A specific bit field in the DCI is "1", to indicate the terminal device to perform SSSG switching (if a current SSSG is the SSSG 0, the terminal device switches to the SSSG 1; or if a current SSSG is the SSSG 1, the terminal device switches to the SSSG 0), and perform PDCCH monitoring based on a search space set belonging to an SSSG obtained through switching. An implicit indication manner may be as follows: An SSSG of current PDCCH monitoring is the SSSG 0, and when the terminal device monitors specific DCI or any DCI, the terminal device switches to the SSSG 1; or an SSSG of current PDCCH monitoring is the SSSG 1, and when the terminal device monitors specific DCI or any DCI, the terminal device switches to the SSSG 0.

For another example, it is assumed that all search space sets are grouped into three groups: an SSSG 0, an SSSG 1, and an SSSG 2. An explicit indication manner may be as follows: A specific bit field in the DCI is "00", to indicate the terminal device to perform PDCCH monitoring based on the search space set belonging to the SSSG 0. A specific bit field in the DCI is "01", to indicate the terminal device to perform PDCCH monitoring based on the search space set belonging to the SSSG 1. A specific bit field in the DCI is "10", to indicate the terminal device to perform PDCCH monitoring based on the search space set belonging to the SSSG 2. A specific bit field "11" in the DCI may be reserved. Alternatively, the explicit indication manner may be as follows: A specific bit field in the DCI is "0", to indicate the terminal device to perform PDCCH monitoring based on a search space set belonging to a current SSSG, that is, SSSG switching is not performed. A specific bit field in the DCI is "1", to indicate the terminal device to perform SSSG switching, and perform PDCCH monitoring based on a search space set belonging to an SSSG obtained through switching. SSSG switching may be as follows: If a current SSSG is the SSSG 0, the terminal device switches to the SSSG 1; if a current SSSG is the SSSG 1, the terminal device switches to the SSSG 2; or if a current SSSG is the SSSG 2, the terminal device switches to the SSSG 0. An implicit indication manner may be as follows: An SSSG of current PDCCH monitoring is an SSSG x, and when the terminal device monitors specific DCI or any DCI, the terminal device switches to an SSSG y. The SSSG x and the SSSG y may be predefined in a protocol, for example, the SSSG x is the SSSG 0, and the SSSG y is the SSSG 1.

Optionally, the terminal device may alternatively switch the SSSG based on a timer.

For example, it is assumed that search space sets are grouped into two groups: an SSSG 0 and an SSSG 1. The terminal device performs PDCCH monitoring based on a search space set belonging to a current SSSG (for example, the SSSG 1), and starts the timer. After the timer expires, the terminal device switches to the SSSG 0, and performs PDCCH monitoring based on the search space set belonging to the SSSG 0.

For another example, it is assumed that search space sets are grouped into three groups: an SSSG 0, an SSSG 1, and an SSSG 2. The terminal device performs PDCCH monitoring based on a search space set belonging to a current SSSG (for example, the SSSG 1), and starts the timer. After the timer expires, the terminal device switches to the SSSG 2, perform PDCCH monitoring based on the search space set belonging to the SSSG 2, and resets the timer. After the timer expires, the terminal device switches to the SSSG 0, and performs PDCCH monitoring based on the search space set belonging to the SSSG 0. For another example, the terminal device performs PDCCH monitoring based on the search space set belonging to the SSSG 1, and starts the timer. After the timer expires, the terminal device switches to the SSSG 0, and performs PDCCH monitoring based on the search space set belonging to the SSSG 0. The terminal device performs PDCCH monitoring based on the search space set belonging to the SSSG 2, and starts the timer. After the timer expires, the terminal device switches to the SSSG 0, and performs PDCCH monitoring based on the search space set belonging to the SSSG 0. In other words, regardless of whether the terminal device currently performs PDCCH monitoring based on the search space set of the SSSG 1 or the search space set of the SSSG 2, after the timer expires, the terminal device switches to the SSSG 0.

It should be noted that PDCCH monitoring based on a search space set belonging to an SSSG means PDCCH monitoring based on a type 3 common search space set and a user equipment-specific search space set that belong to an SSSG. Correspondingly, it may be understood that grouping the plurality of search space sets means grouping the type 3 common search space set and the user equipment-specific search space set.

Therefore, the terminal device switches the SSSG to perform PDCCH monitoring only based on some search space sets in an active downlink BWP, to reduce power consumption.

A plurality of different monitoring behaviors, for example, may be a first candidate monitoring behavior to a fifth candidate monitoring behavior in the following, for PDCCH monitoring by the terminal device may be defined based on the mechanism of skipping PDCCH monitoring and the search space set group switching mechanism.

First candidate monitoring behavior: The PDCCH is monitored based on a configured search space set. Specifically, the PDCCH may be monitored based on configuration information of the search space set, where the configuration information of the search space set includes a PDCCH monitoring periodicity. It may be understood as that the mechanism of skipping PDCCH monitoring is not activated or is not applied. If no search space set group in the active downlink BWP is configured for the terminal device, the terminal device may perform PDCCH monitoring based on the configured search space set in the active downlink BWP. If a search space set group in the active downlink BWP is configured for the terminal device, the terminal device may perform PDCCH monitoring based on a search space set that belongs to a current SSSG.

Second candidate monitoring behavior: PDCCH monitoring is skipped (or stopped) in skipped duration (skipped duration), namely, the mechanism of skipping PDCCH monitoring.

Third candidate monitoring behavior: The PDCCH is monitored based on the search space set belonging to the SSSG 0. Specifically, monitoring of the PDCCH based on the search space set of the SSSG 1 and the search space set of the SSSG 2 (if the SSSG 2 exists) is stopped.

Fourth candidate monitoring behavior: The PDCCH is monitored based on the search space set belonging to the SSSG 1. Specifically, monitoring of the PDCCH based on the search space set of the SSSG 0 and the search space set of the SSSG 2 (if the SSSG 2 exists) is stopped.

Fifth candidate monitoring behavior: The PDCCH is monitored based on the search space set belonging to the SSSG 2. Specifically, monitoring of the PDCCH based on the search space set of the SSSG 0 and the search space set of the SSSG 1 is stopped.

In some examples, the first candidate monitoring behavior may be represented as a behavior 1, the second candidate monitoring behavior may be represented as a behavior 1A, the third candidate monitoring behavior may be represented as a behavior 2, the fourth candidate monitoring behavior may be represented as a behavior 2A, and the fifth candidate monitoring behavior may be represented as a behavior 2B.

The terminal device may perform PDCCH monitoring based on one of the first candidate monitoring behavior to the fifth candidate monitoring behavior. However, currently, there is no effective solution to indicate how the terminal device determines a specific monitoring behavior. If the five candidate monitoring behaviors may be randomly indicated, implementation complexity of the terminal device increases, and no additional benefit is brought.

In view of this, an embodiment of this disclosure provides a solution in which a network device configures a monitoring combination for a terminal device. The terminal device can determine a monitoring behavior based on a configured monitoring combination indication, to effectively reduce power consumption of the terminal device and reduce implementation complexity of the terminal device.

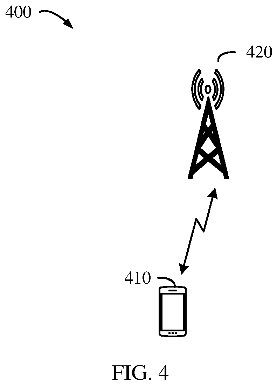

FIG. 4 is a schematic diagram of a communication system 400 in which an embodiment of this disclosure can be implemented. The system 400 shown in FIG. 4 includes a terminal device 410 and a network device 420. The terminal device 410 may communicate with the network device 420.

It may be understood that FIG. 4 is merely an example. A type of the terminal device 410, a type of the network device 420, a communication protocol used by the communication system 400, and the like are not limited in embodiments of this disclosure. The following describes some embodiments of this disclosure with reference to the communication system 400 shown in FIG. 4.

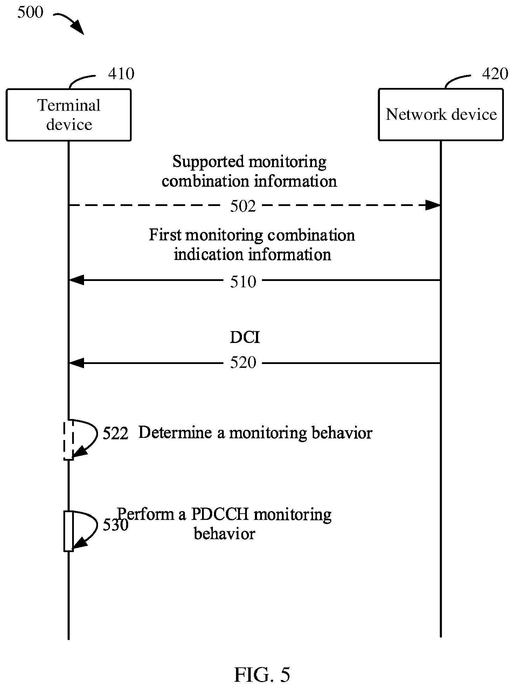

FIG. 5 is a diagram of signaling interaction of a process 500 between the terminal device 410 and the network device 420 according to some embodiments of this disclosure.

The network device 420 sends 510 first indication information for monitoring combination to the terminal device 410, where the first indication information for monitoring combination indicates at least two candidate monitoring behaviors.

The candidate monitoring behaviors related to embodiments of this disclosure include a first candidate monitoring behavior, a second candidate monitoring behavior, a third candidate monitoring behavior, a fourth candidate monitoring behavior, and a fifth candidate monitoring behavior. The first candidate monitoring behavior indicates to perform PDCCH monitoring based on a configured search space set, the second candidate monitoring behavior indicates to stop PDCCH monitoring within preset duration, the third candidate monitoring behavior indicates to perform PDCCH monitoring based on a search space set in a first search space set group, the fourth candidate monitoring behavior indicates to perform PDCCH monitoring based on a search space set in a second search space set group, and the fifth candidate monitoring behavior indicates to perform PDCCH monitoring based on a search space set in a third search space set group.

Specifically, a monitoring combination indicated by the first indication information for monitoring combination may be one of the following: a first monitoring combination, a second monitoring combination, a third monitoring combination, a fourth monitoring combination, or a fifth monitoring combination. In another example, a monitoring combination indicated by the first indication information for monitoring combination may be one of the following: a first monitoring combination, a second monitoring combination, a fourth monitoring combination, or a fifth monitoring combination.

The first monitoring combination includes the first candidate monitoring behavior and the second candidate monitoring behavior. The second monitoring combination includes the second candidate monitoring behavior, the third candidate monitoring behavior, and the fourth candidate monitoring behavior. The third monitoring combination includes the second candidate monitoring behavior, the third candidate monitoring behavior, the fourth candidate monitoring behavior, and the fifth candidate monitoring behavior. The fourth monitoring combination includes the third candidate monitoring behavior and the fourth candidate monitoring behavior. The fifth monitoring combination includes the third candidate monitoring behavior, the fourth candidate monitoring behavior, and the fifth candidate monitoring behavior.

In embodiments of this disclosure, the network device 420 may explicitly or implicitly indicate the first monitoring combination, the second monitoring combination, the third monitoring combination, the fourth monitoring combination, or the fifth monitoring combination to the terminal device 410 by using RRC signaling.

Specifically, the network device 420 may configure the first indication information for monitoring combination based on a mechanism of skipping PDCCH monitoring and a search space set group switching mechanism. For example, if no search space set group in an active downlink BWP is configured for the terminal device 410, the at least two candidate monitoring behaviors indicated by the first indication information for monitoring combination do not include the third candidate monitoring behavior, the fourth candidate monitoring behavior, and the fifth candidate monitoring behavior. If search space sets in the active downlink BWP are grouped into two groups, the at least two candidate monitoring behaviors indicated by the first indication information for monitoring combination do not include the fifth candidate monitoring behavior.

In some embodiments, a specific parameter of the RRC signaling may be used as the first indication information for monitoring combination to indicate any one of the first monitoring combination, the second monitoring combination, the third monitoring combination, the fourth monitoring combination, or the fifth monitoring combination.

For example, the specific parameter may be a PDCCH monitoring adaptation (PdcchMonitorAdaptation) parameter, and the network device 420 may indicate the monitoring combination by using PdcchMonitorAdaptation. For example, the parameter is as follows:

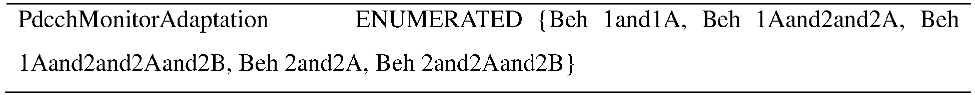

"ENUMERATED" indicates enumeration. "Beh 1and1A" indicates the first monitoring combination including the first candidate monitoring behavior and the second candidate monitoring behavior. "Beh lAand2and2A" indicates the second monitoring combination including the second candidate monitoring behavior, the third candidate monitoring behavior, and the fourth candidate monitoring behavior. "Beh lAand2and2Aand2B" indicates the third monitoring combination including the second candidate monitoring behavior, the third candidate monitoring behavior, the fourth candidate monitoring behavior, and the fifth candidate monitoring behavior. "Beh 2and2A" indicates the fourth monitoring combination including the third candidate monitoring behavior and the fourth candidate monitoring behavior. "Beh 2and2Aand2B" indicates the fifth monitoring combination including the third candidate monitoring behavior, the fourth candidate monitoring behavior, and the fifth candidate monitoring behavior.

For example, the specific parameter may be included in an information element (Information Element, IE) of RRC, for example, included in PDCCH-Config (PDCCH-Config), included in BWP-DownlinkDedicated (BWP-DownlinkDedicated), or included in ServingCellConfig (ServingCellConfig).

Optionally, when the at least two candidate monitoring behaviors include the second candidate monitoring behavior, the network device 420 may further configure skipped duration (skipped duration). For example, the network device 420 may send indication information of preset duration to the terminal device 410, so that the terminal device 410 stops PDCCH monitoring in the preset duration. It may be understood that the indication information of the preset duration may be included in PDCCH-Config, or may be independent of PDCCH-Config. This is not limited in this disclosure. A time unit of the preset duration may be a second, a millisecond, a frame, a subframe, a slot, a quantity of PDCCH monitoring occasions, a slot set including several consecutive slots, or the like. This is not limited in this disclosure.

In some embodiments, the RRC signaling may directly configure the at least two candidate monitoring behaviors through enumeration, for example, may configure the at least two candidate monitoring behaviors in a form of {parameter 1, parameter 2, ..., parameter N}. Each parameter corresponds to one candidate monitoring behavior.

Specifically, {Beh 1, Beh 1A} may indicate the first monitoring combination including the first candidate monitoring behavior and the second candidate monitoring behavior. {Beh 1A, Beh 2, Beh 2A} indicates the second monitoring combination including the second candidate monitoring behavior, the third candidate monitoring behavior, and the fourth candidate monitoring behavior. {Beh 1A, Beh 2, Beh 2A, Beh 2B } indicates the third monitoring combination including the second candidate monitoring behavior, the third candidate monitoring behavior, the fourth candidate monitoring behavior, and the fifth candidate monitoring behavior. {Beh 2, Beh 2A} indicates the fourth monitoring combination including the third candidate monitoring behavior and the fourth candidate monitoring behavior. {Beh 2, Beh 2A, Beh 2B } indicates the fifth monitoring combination including the third candidate monitoring behavior, the fourth candidate monitoring behavior, and the fifth candidate monitoring behavior.

In some embodiments, the network device 420 may use a combination of a first specific parameter and a second specific parameter of the RRC signaling to indicate any one of the first monitoring combination, the second monitoring combination, the third monitoring combination, the fourth monitoring combination, or the fifth monitoring combination.

For example, the first specific parameter may be PDCCH monitoring adaptation (PdcchMonitorAdaptation), and the second specific parameter may be a quantity of search space set groups (nrofSearchSpaceSetGroup). For example, the parameter is as follows:

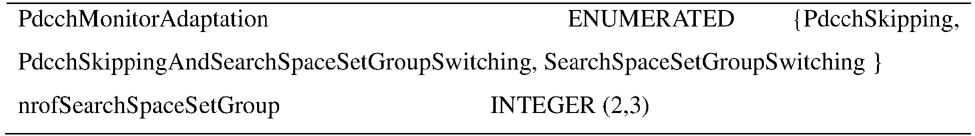

"ENUMERATED" indicates enumeration, and "INTEGER" indicates an integer.

Specifically, that PdcchMonitorAdaptation indicates "PdcchSkipping" indicates the first monitoring combination including the first candidate monitoring behavior and the second candidate monitoring behavior.

Specifically, that PdcchMonitorAdaptation indicates "PdcchSkippingAndSearchSpaceSetGroupSwitching" and nrofSearchSpaceSetGroup indicates "2" indicates the second monitoring combination including the second candidate monitoring behavior, the third candidate monitoring behavior, and the fourth candidate monitoring behavior. Optionally, that PdcchMonitorAdaptation indicates "PdcchSkippingAndSearchSpaceSetGroupSwitching" alternatively indicates the second monitoring combination including the second candidate monitoring behavior, the third candidate monitoring behavior, and the fourth candidate monitoring behavior.

Specifically, that PdcchMonitorAdaptation indicates "PdcchSkippingAndSearchSpaceSetGroupSwitching" and nrofSearchSpaceSetGroup indicates "3" indicates the third monitoring combination including the second candidate monitoring behavior, the third candidate monitoring behavior, the fourth candidate monitoring behavior, and the fifth candidate monitoring behavior.

Specifically, that PdcchMonitorAdaptation indicates "SearchSpaceSetGroupSwitching" and nrofSearchSpaceSetGroup indicates "2" indicates the fourth monitoring combination including the third candidate monitoring behavior and the fourth candidate monitoring behavior.

Specifically, that PdcchMonitorAdaptation indicates "SearchSpaceSetGroupSwitching" and nrofSearchSpaceSetGroup indicates "3" indicates the fifth monitoring combination including the third candidate monitoring behavior, the fourth candidate monitoring behavior, and the fifth candidate monitoring behavior.

Optionally, when the at least two candidate monitoring behaviors include the second candidate monitoring behavior, the network device 420 may further configure skipped duration (skipped duration). For example, the network device 420 may send indication information of preset duration to the terminal device 410, so that the terminal device 410 stops monitoring the PDCCH in the preset duration. It may be understood that the indication information of the preset duration may be included in PDCCH-Config, or may be independent of PDCCH-Config (for example, sending by using other configuration information). This is not limited in this disclosure. A time unit of the preset duration may be a second, a millisecond, a frame, a subframe, a slot, a quantity of PDCCH monitoring occasions, a slot set including several consecutive slots, or the like. This is not limited in this disclosure.

In some embodiments, the network device 420 may use a combination of a third specific parameter and a fourth specific parameter of the RRC signaling to indicate any one of the first monitoring combination, the second monitoring combination, the third monitoring combination, the fourth monitoring combination, or the fifth monitoring combination.

For example, the third specific parameter may indicate skipped duration (skipped duration) in which PDCCH monitoring is stopped. The third specific parameter may be included in PDCCH-Config, or may be independent of PDCCH-Config. This is not limited in this disclosure.

For example, the fourth specific parameter may indicate an index of an SSSG to which the search space set belongs, where the index may be at least one of 0, 1, or 2. The fourth specific parameter may be included in the configuration information of the search space set. A search space set SS set 1 is used as an example. Configuration information of the search space set may include the fourth specific parameter, and the fourth specific parameter indicates an index of an SSSG to which the search space set belongs.

Specifically, the network device 420 configures the third specific parameter and does not configure the fourth specific parameter, to indicate the first monitoring combination including the first candidate monitoring behavior and the second candidate monitoring behavior. The network device 420 configures the third specific parameter and the fourth specific parameter, and the fourth specific parameter has two types: 0 and 1, to indicate the second monitoring combination including the second candidate monitoring behavior, the third candidate monitoring behavior, and the fourth candidate monitoring behavior. The network device 420 configures the third specific parameter and the fourth specific parameter, and the fourth specific parameter has three types: 0, 1, and 2, to indicate the third monitoring combination including the second candidate monitoring behavior, the third candidate monitoring behavior, the fourth candidate monitoring behavior, and the fifth candidate monitoring behavior. The network device 420 configures the fourth specific parameter and does not configure the third specific parameter, and the fourth specific parameter has two types: 0 and 1, to indicate the fourth monitoring combination including the third candidate monitoring behavior and the fourth candidate monitoring behavior. The network device 420 configures the fourth specific parameter and does not configure the third specific parameter, and the fourth specific parameter has three types: 0, 1, and 2, to indicate the fifth monitoring combination including the third candidate monitoring behavior, the fourth candidate monitoring behavior, and the fifth candidate monitoring behavior.

Additionally or optionally, the network device 420 may further send the configuration information of the search space set to the terminal device 410. The configuration information of the search space set may include at least one of the following: identification information of the search space set, a control resource set associated with the search space set, a PDCCH monitoring periodicity and offset, a PDCCH monitoring pattern within a slot, duration, an aggregation level and a quantity of PDCCH candidates corresponding to each aggregation level, search space set type indication information, and the like.

Optionally, in some embodiments of this disclosure, the first indication information for monitoring combination may indicate a monitoring combination of a first BWP. In addition, the network device 420 may further send second indication information for monitoring combination to the terminal device 410. The second indication information for monitoring combination indicates a monitoring combination of a second BWP. The first indication information for monitoring combination may indicate one of the following: the first monitoring combination, the second monitoring combination, the third monitoring combination, the fourth monitoring combination, or the fifth monitoring combination. The second indication information for monitoring combination may indicate one of the following: the first monitoring combination, the second monitoring combination, the third monitoring combination, the fourth monitoring combination, or the fifth monitoring combination. It may be understood that although two BWPs are used as an example for description herein, this is also applicable to a case of more BWPs. For example, a monitoring combination of a respective BWP may be indicated for each BWP. Correspondingly, the first candidate monitoring behavior indicates to perform PDCCH monitoring based on a configured search space set in the active downlink BWP, the second candidate monitoring behavior indicates to stop PDCCH monitoring within preset duration in the active downlink BWP, the third candidate monitoring behavior indicates to perform PDCCH monitoring based on a search space set in a first search space set group in the active downlink BWP, the fourth candidate monitoring behavior indicates to perform PDCCH monitoring based on a search space set in a second search space set group in the active downlink BWP, and the fifth candidate monitoring behavior indicates to perform PDCCH monitoring based on a search space set in a third search space set group in the active downlink BWP.

When a plurality of BWPs are configured for the terminal device 410, monitoring combinations may be separately configured for different BWPs. In addition, it may be understood that monitoring combinations configured for different BWPs may be the same or different. For example, the network device 420 may configure a same monitoring combination for a plurality of BWPs that belong to a same cell.

Optionally, in some embodiments of this disclosure, the first indication information for monitoring combination may indicate a monitoring combination of a first cell. In addition, the network device 420 may further send third indication information for monitoring combination to the terminal device 410. The third indication information for monitoring combination indicates a monitoring combination of a second cell. When a plurality of cells are configured for the terminal device 410, monitoring combinations may be separately configured for different cells. In addition, it may be understood that monitoring combinations configured for different cells may be the same or different. For example, the network device 420 may configure a same monitoring combination for a plurality of cells that belong to a same cell group.

Optionally, in some embodiments of this disclosure, the first indication information for monitoring combination may indicate a monitoring combination of a first cell group. In addition, the network device 420 may further send fourth indication information for monitoring combination to the terminal device 410. The fourth indication information for monitoring combination indicates a monitoring combination of a second cell group. When a plurality of cell groups are configured for the terminal device 410, monitoring combinations may be separately configured for different cell groups. In addition, it may be understood that monitoring combinations configured for different cell groups may be the same or different.

As shown in FIG. 5, additionally or optionally, the terminal device 410 may send 502 supported monitoring combination information to the network device 420.

Specifically, the supported monitoring combination information may indicate a monitoring combination supported by the terminal device 410. The monitoring combination supported by the terminal device 410 may include at least one of the first monitoring combination, the second monitoring combination, the third monitoring combination, the fourth monitoring combination, and the fifth monitoring combination. In addition, correspondingly, a candidate monitoring behavior in the monitoring combination indicated by the first indication information for monitoring combination sent by the network device 420 is a subset or a universal set of candidate monitoring behaviors in the monitoring combination supported by the terminal device 410. The supported monitoring combination information may be included in UE capability information or UE assistance information. In another example, the monitoring combination supported by the terminal device 410 may include at least one of the first monitoring combination, the second monitoring combination, the fourth monitoring combination, and the fifth monitoring combination.

In some embodiments, the monitoring combination supported by the terminal device 410 may be indicated by using a first parameter in the UE capability information or the UE assistance information. For example, the first parameter may be supported PDCCH monitoring adaptation (supportedPdcchMonitoringAdaptation), for example, the parameter is as follows:

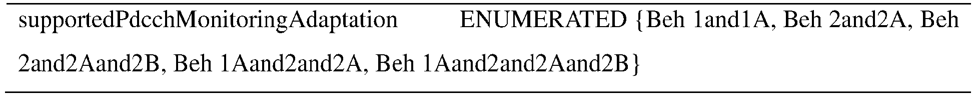

"ENUMERATED" indicates enumeration. "Beh 1and1A" indicates the first monitoring combination including the first candidate monitoring behavior and the second candidate monitoring behavior. "Beh lAand2and2A" indicates the second monitoring combination including the second candidate monitoring behavior, the third candidate monitoring behavior, and the fourth candidate monitoring behavior. "Beh 1Aand2and2Aand2B" indicates the third monitoring combination including the second candidate monitoring behavior, the third candidate monitoring behavior, the fourth candidate monitoring behavior, and the fifth candidate monitoring behavior. "Beh 2and2A" indicates the fourth monitoring combination including the third candidate monitoring behavior and the fourth candidate monitoring behavior. "Beh 2and2Aand2B" indicates the fifth monitoring combination including the third candidate monitoring behavior, the fourth candidate monitoring behavior, and the fifth candidate monitoring behavior.

In some embodiments, the UE capability information or the UE assistance information may directly indicate, through enumeration, the monitoring combination supported by the terminal device 410, for example, may configure the monitoring combination in a form of {parameter 1, parameter 2, ..., parameter N}. Each parameter corresponds to one candidate monitoring behavior.

Specifically, {Beh 1, Beh 1A} may indicate the first monitoring combination including the first candidate monitoring behavior and the second candidate monitoring behavior. {Beh 1A, Beh 2, Beh 2A} indicates the second monitoring combination including the second candidate monitoring behavior, the third candidate monitoring behavior, and the fourth candidate monitoring behavior. {Beh 1A, Beh 2, Beh 2A, Beh 2B} indicates the third monitoring combination including the second candidate monitoring behavior, the third candidate monitoring behavior, the fourth candidate monitoring behavior, and the fifth candidate monitoring behavior. {Beh 2, Beh 2A} indicates the fourth monitoring combination including the third candidate monitoring behavior and the fourth candidate monitoring behavior. {Beh 2, Beh 2A, Beh 2B} indicates the fifth monitoring combination including the third candidate monitoring behavior, the fourth candidate monitoring behavior, and the fifth candidate monitoring behavior.

In some embodiments, the monitoring combination supported by the terminal device 410 may be indicated by using a combination of a second parameter and a third parameter in the UE capability information or the UE assistance information. For example, the second parameter may be supported PDCCH monitoring adaptation (supportedPdcchMonitoringAdaptation), and the third parameter may be a quantity of supported search space set groups (supportedNrofSearchSpaceSetGroup). For example, the parameter is as follows:

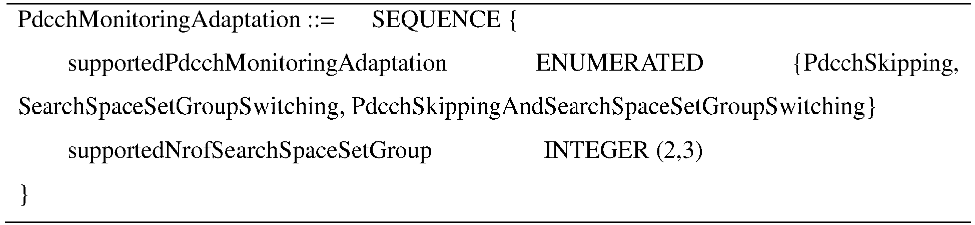

"ENUMERATED" indicates enumeration, and "INTEGER" indicates an integer.

Specifically, that supportedPdcchMonitoringAdaptation indicates "PdcchSkipping" indicates the first monitoring combination including the first candidate monitoring behavior and the second candidate monitoring behavior.

Specifically, that supportedPdcchMonitoringAdaptation indicates "PdcchSkippingAndSearchSpaceSetGroupSwitching" and supportedNrofSearchSpaceSetGroup indicates "2" indicates the second monitoring combination including the second candidate monitoring behavior, the third candidate monitoring behavior, and the fourth candidate monitoring behavior. Optionally, that supportedPdcchMonitoringAdaptation indicates "PdcchSkippingAndSearchSpaceSetGroupSwitching" indicates the second monitoring combination including the second candidate monitoring behavior, the third candidate monitoring behavior, and the fourth candidate monitoring behavior.

Specifically, that supportedPdcchMonitoringAdaptation indicates "PdcchSkippingAndSearchSpaceSetGroupSwitching" and supportedNrofSearchSpaceSetGroup indicates "3" indicates the third monitoring combination including the second candidate monitoring behavior, the third candidate monitoring behavior, the fourth candidate monitoring behavior, and the fifth candidate monitoring behavior.

Specifically, that supportedPdcchMonitoringAdaptation indicates "SearchSpaceSetGroupSwitching" and supportedNrofSearchSpaceSetGroup indicates "2" indicates the fourth monitoring combination including the third candidate monitoring behavior and the fourth candidate monitoring behavior.

Specifically, that supportedPdcchMonitoringAdaptation indicates "SearchSpaceSetGroupSwitching" and supportedNrofSearchSpaceSetGroup indicates "3" indicates the fifth monitoring combination including the third candidate monitoring behavior, the fourth candidate monitoring behavior, and the fifth candidate monitoring behavior.

It can be understood that the network device 420 may determine the first indication information for monitoring combination based on the supported monitoring combination information from the terminal device 410. Then, the network device 420 may send the first indication information for monitoring combination to the terminal device 410 by using the RRC signaling. For example, one monitoring combination may be selected from the monitoring combinations indicated by the supported monitoring combination information, and the first indication information for monitoring combination indicates the selected monitoring combination.

In the process 500, the network device 420 sends 520 the DCI to the terminal device 410.

Specifically, the terminal device 410 may determine a PDCCH monitoring occasion based on the configuration information of the search space set, and may further perform PDCCH monitoring on the determined PDCCH monitoring occasion. On a PDCCH monitoring occasion, the terminal device 410 obtains the DCI from the network device 420 through monitoring. The DCI is carried on the PDCCH.

The DCI may indicate the monitoring behavior of the terminal device 410, and the indicated monitoring behavior belongs to one of the at least two candidate monitoring behaviors included in the first indication information for monitoring combination.

In the process 500, the terminal device 410 may perform 530 PDCCH monitoring behavior based on the first indication information for monitoring combination and the DCI.

Additionally or optionally, the terminal device 410 may determine 522 the monitoring behavior from the at least two candidate monitoring behaviors based on the first indication information for monitoring combination and the DCI.

The monitoring combination indicated by the first indication information for monitoring combination includes the at least two candidate monitoring behaviors. A candidate monitoring behavior corresponding to a value of the DCI may be selected from the at least two candidate monitoring behaviors based on the specific value of the DCI.

In embodiments of this disclosure, the DCI may have a preset quantity of bits. For example, the preset quantity of bits may be 1 bit, 2 bits, or more bits. For example, the preset quantity of bits is 2 bits. The DCI may have four different values: 00, 01, 10, and 11. It may be understood that the 2 bits may be two consecutive bits in the DCI, for example, 2 bits in a same field, or two separated independent bits, for example, two independent fields each have 1 bit. Then, the four different values may be understood as values indicated by two separated independent bits.

In some embodiments, the monitoring behavior may be determined by using an example shown in Table 2. For example, when the first indication information for monitoring combination indicates the second monitoring combination and the DCI is a first value, the monitoring behavior is determined as the second candidate monitoring behavior. When the first indication information for monitoring combination indicates the fifth monitoring combination and the DCI is a second value, the monitoring behavior is determined as the fourth candidate monitoring behavior. Optionally, when the first indication information for monitoring combination indicates the first monitoring combination, and the DCI is any one of the second value, a third value, or a fourth value, the monitoring behavior is determined as the first candidate monitoring behavior. The first value, the second value, the third value, and the fourth value shown in Table 2 are not equal to each other. In an example, the first value is 00, the second value is 01, the third value is 10, and the fourth value is 11. However, a person skilled in the art may understand that this is merely an example. In view of this, another different example may be obtained, and still falls within the protection scope of this disclosure.

**Table 2**

| Monitoring combination indicated by first indication information for monitoring combination | Monitoring behavior | | | |
|---|---|---|---|---|
| | DCI is a first value | DCI is a second value | DCI is a third value | DCI is a fourth value |
| First monitoring combination | Second candidate monitoring behavior | First candidate monitoring behavior | | |
| Second monitoring combination | Second candidate monitoring behavior | Third candidate monitoring behavior | Fourth candidate monitoring behavior | |
| Third monitoring combination | Second candidate monitoring behavior | Third candidate monitoring behavior | Fourth candidate monitoring behavior | Fifth candidate monitoring behavior |
| Fourth monitoring combination | Third candidate monitoring behavior | Fourth candidate monitoring behavior | | |
| Fifth monitoring combination | Third candidate monitoring behavior | Fourth candidate monitoring behavior | Fifth candidate monitoring behavior | |

It should be noted that Table 2 shows only an example of this disclosure. For another example, when the first indication information for monitoring combination indicates the first monitoring combination, the DCI may be the first value to indicate the second candidate monitoring behavior, and the DCI may be the second value to indicate the first candidate monitoring behavior. Alternatively, the DCI may be the second value to indicate the second candidate monitoring behavior, and the DCI may be the first value to indicate the first candidate monitoring behavior. Alternatively, the DCI may be the third value to indicate the second candidate monitoring behavior, the DCI may be the fourth value to indicate the first candidate monitoring behavior, and the like. Examples are not enumerated herein.

In some other embodiments, when the determined monitoring behavior is the second candidate monitoring behavior, fixed preset duration (that is, skipped duration) may be used, or a plurality of different pieces of preset duration may be used. An example is shown in Table 3.

**Table 3**

| Monitoring combination indicated by first indication information for monitoring combination | Monitoring behavior | | | |
|---|---|---|---|---|
| | DCI is a first value | DCI is a second value | DCI is a third value | DCI is a fourth value |
| First monitoring combination | First candidate monitoring behavior | Second candidate monitoring behavior (first preset duration) | Second candidate monitoring behavior (second preset duration) | Second candidate monitoring behavior (third preset duration) |
| Second monitoring combination | Third candidate monitoring behavior | Fourth candidate monitoring behavior | Second candidate monitoring behavior (first preset duration) | Second candidate monitoring behavior (second preset duration) |

It should be noted that Table 3 shows only a case in which the first indication information for monitoring combination indicates the first monitoring combination or the second monitoring combination. For another case, refer to Table 2. It may be understood that Table 3 is merely an example. Various variations may be made according to Table 3 to obtain other embodiments.

In some other embodiments, the monitoring behavior may be determined according to a one-to-one correspondence between the value of the DCI and locations or indexes of the at least two candidate monitoring behaviors in the RRC signaling. In some embodiments, the RRC signaling may configure the at least two candidate monitoring behaviors through enumeration. For example, when the at least two candidate monitoring behaviors configured in the RRC signaling are {Beh 1A, Beh 2, Beh 2A}, that the DCI is the first value corresponds to a candidate monitoring behavior of a first index, namely, the second candidate monitoring behavior Beh 1A. That the DCI is the second value corresponds to a candidate monitoring behavior of a second index, namely, the third candidate monitoring behavior Beh 2. That the DCI is the third value corresponds to a candidate monitoring behavior of a third index, namely, the fourth candidate monitoring behavior Beh 2A. In an example, the monitoring behavior may be determined according to a one-to-many correspondence between the value of the DCI and locations or indexes of the at least two candidate monitoring behaviors in the RRC signaling. For example, when the at least two candidate monitoring behaviors configured in the RRC signaling are {Beh 1A, Beh 2, Beh 2A}, that the DCI is the first value corresponds to a candidate monitoring behavior of a first index, namely, the second candidate monitoring behavior Beh 1A, and the first preset duration is used. That the DCI is the second value corresponds to the candidate monitoring behavior of the first index, namely, the second candidate monitoring behavior Beh 1A, and the second preset duration is used. That the DCI is the third value corresponds to a candidate monitoring behavior of a second index, namely, the third candidate monitoring behavior Beh 2. That the DCI is the fourth value corresponds to a candidate monitoring behavior of a third index, namely, the fourth candidate monitoring behavior Beh 2A.

It may be understood that the monitoring behavior determined by the terminal device 410 may be used for a type 3 common search space set and a terminal device-specific search space set. For example, it is assumed that the monitoring behavior is the second candidate monitoring behavior, monitoring may be stopped in preset duration for the type 3 common search space set and the terminal device-specific search space set, and the PDCCH is monitored after the preset duration. For another type of common search space set, for example, type 0, type 0A, type 1, and type 2 common search space sets, the terminal device 410 may skip or not skip PDCCH monitoring with DCI scrambled by a C-RNTI, an MCS-C-RNTI, or a CS-RNTI. This is not limited in embodiments of this disclosure. For the type 0, type 0A, type 1, and type 2 common search space sets, whether the terminal device performs PDCCH monitoring with DCI scrambled by an SI-RNTI, an RA-RNTI, a TC-RNTI, or a P-RNTI is not limited in embodiments of this disclosure.

When the terminal device 410 is configured with a plurality of BWPs, and monitoring combinations are separately configured for different BWPs, the DCI may further indicate a BWP identifier (Identifier, ID). The terminal device 410 may determine the monitoring behavior based on the monitoring combination of the BWP corresponding to the BWP ID and the foregoing embodiment.

In this way, in embodiments of this disclosure, the network device may configure the monitoring combination for the terminal device, and then the terminal device may determine the monitoring behavior based on the configured monitoring combination and the DCI from the network device. The terminal device performs the monitoring behavior, to reduce unnecessary PDCCH monitoring. This greatly reduces power consumption. In addition, based on the monitoring combination configuration manner in embodiments of this disclosure, an appropriate combination of a plurality of monitoring behaviors is implemented, and implementation complexity of the terminal device is reduced.

It should be understood that, in embodiments of this disclosure, "first", "second", "third", and the like are only intended to indicate that a plurality of objects may be different, but two objects may be the same. The "first", "second", "third", and the like should not be construed as a limitation on embodiments of this disclosure.

It should further be understood that division into the manners, cases, categories, and embodiments in embodiments of this disclosure is only intended for ease of description, and should not constitute a particular limitation. The features in the manners, categories, cases, and embodiments may be combined with each other if logical.

It should further be understood that, the foregoing content is only intended to help a person skilled in the art better understand embodiments of this disclosure, instead of limiting the scope of embodiments of this disclosure. A person skilled in the art may make various modifications, changes, combinations, or the like based on the foregoing content. A modified, changed, or combined solution also falls within the scope of embodiments of this disclosure.

It should further be understood that the descriptions of the foregoing content focus on emphasizing a difference between the embodiments, and for the same or similar content of the embodiments, refer to each other. For simplicity, details are not further described herein.

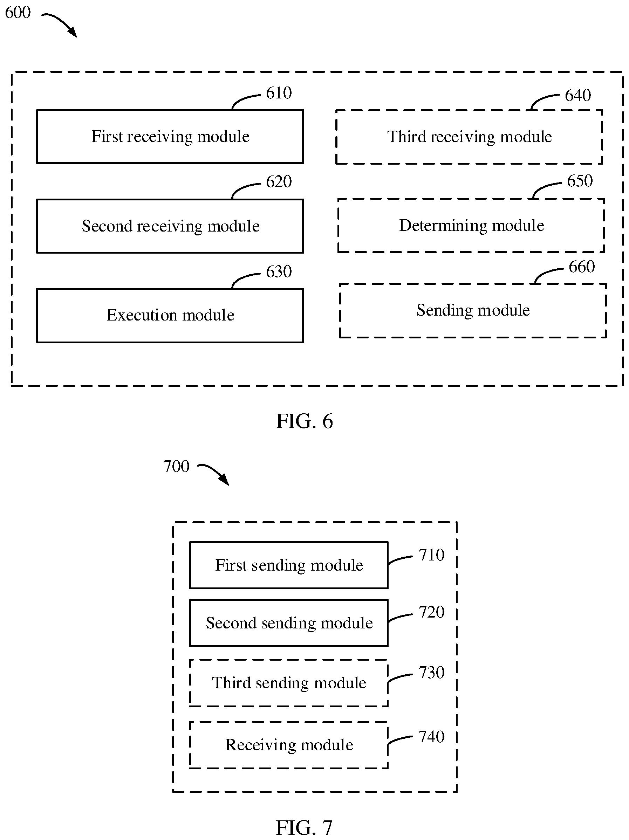

FIG. 6 is a schematic block diagram of a communication apparatus 600 for information transmission according to some embodiments of this disclosure. The apparatus 600 may be implemented as the terminal device 410, a part (for example, a chip) of the terminal device 410, or the like. This is not limited in this disclosure.

As shown in FIG. 6, the apparatus 600 includes a first receiving module 610, a second receiving module 620, and an execution module 630. The first receiving module 610 is configured to receive first indication information for monitoring combination from a network device, where the first indication information for monitoring combination indicates at least two candidate monitoring behaviors. The second receiving module 620 is configured to receive downlink control information DCI from the network device, where the DCI indicates a monitoring behavior of the communication apparatus, and the monitoring behavior is one of the at least two candidate monitoring behaviors. The execution module 630 is configured to perform a downlink control channel (e.g.PDCCH) monitoring behavior based on the first indication information for monitoring combination and the DCI.

Specifically, in some embodiments, the first receiving module 610 may be configured to receive the first indication information for monitoring combination from the network device. The first indication information for monitoring combination indicates one of the following: a first monitoring combination, including a first candidate monitoring behavior and a second candidate monitoring behavior; a second monitoring combination, including the second candidate monitoring behavior, a third candidate monitoring behavior, and a fourth candidate monitoring behavior; a third monitoring combination, including the second candidate monitoring behavior, the third candidate monitoring behavior, the fourth candidate monitoring behavior, and a fifth candidate monitoring behavior; a fourth monitoring combination, including the third candidate monitoring behavior and the fourth candidate monitoring behavior; or a fifth monitoring combination, including the third candidate monitoring behavior, the fourth candidate monitoring behavior, and the fifth candidate monitoring behavior. The first candidate monitoring behavior indicates to perform PDCCH monitoring based on a configured search space set, the second candidate monitoring behavior indicates to stop PDCCH monitoring within preset duration, the third candidate monitoring behavior indicates to perform PDCCH monitoring based on a search space set in a first search space set group, the fourth candidate monitoring behavior indicates to perform PDCCH monitoring based on a search space set in a second search space set group, and the fifth candidate monitoring behavior indicates to perform PDCCH monitoring based on a search space set in a third search space set group.

When the first indication information for monitoring combination indicates the first monitoring combination, the second monitoring combination, or the third monitoring combination, the apparatus 600 further includes a third receiving module 640, configured to receive indication information of the preset duration from the network device.

Additionally or optionally, the apparatus 600 may further include a determining module 650, configured to determine the monitoring behavior from the at least two candidate monitoring behaviors based on the DCI.

In some embodiments, the first indication information for monitoring combination indicates a monitoring combination of a first bandwidth part BWP, and the first receiving module 610 is further configured to receive second indication information for monitoring combination from the network device, where the second indication information for monitoring combination indicates a monitoring combination of a second BWP. Optionally, the monitoring combination of the first BWP is the same as the monitoring combination of the second BWP.

In some embodiments, the first indication information for monitoring combination indicates a monitoring combination of a first cell, and the first receiving module 610 is further configured to receive third indication information for monitoring combination from the network device, where the third indication information for monitoring combination indicates a monitoring combination of a second cell. Optionally, the monitoring combination of the first cell is the same as the monitoring combination of the second cell.

As shown in FIG. 6, the apparatus 600 may further include a sending module 660, configured to send supported monitoring combination information to the network device, where the supported monitoring combination information indicates a monitoring combination supported by the communication apparatus.

In some embodiments, the monitoring behavior performed by the execution module 630 is used for a type 3 common search space set and a terminal device-specific search space set.

Division into modules or units in embodiments of this disclosure is an example, is merely logical function division, and may be another division manner during actual implementation. In addition, functional modules in embodiments of this disclosure may be integrated into one unit, or may exist alone physically, or two or more units are integrated into one unit. The integrated unit may be implemented in a form of hardware, or may be implemented in a form of a software functional unit.

The apparatus 600 in FIG. 6 can be configured to implement the foregoing processes performed by the terminal device 410 with reference to FIG. 5. For brevity, details are not described herein again.

FIG. 7 is a schematic block diagram of a communication apparatus 700 for information transmission according to some embodiments of this disclosure. The apparatus 700 may be implemented as the network device 420, a part (for example, a chip) of the network device 420, or the like. This is not limited in this disclosure.

As shown in FIG. 7, the apparatus 700 includes a first sending module 710 and a second sending module 720. The first sending module 710 is configured to send first indication information for monitoring combination to a terminal device, where the first indication information for monitoring combination indicates at least two candidate monitoring behaviors. The second sending module 720 is configured to send downlink control information DCI to the terminal device, so that the terminal device performs a downlink control channel (e.g. PDCCH) monitoring behavior based on the first indication information for monitoring combination and the DCI, where the monitoring behavior is one of the at least two candidate monitoring behaviors.

Specifically, in some embodiments, the first sending module 710 may be configured to send the first indication information for monitoring combination to the terminal device. The first indication information for monitoring combination indicates one of the following: a first monitoring combination, including a first candidate monitoring behavior and a second candidate monitoring behavior; a second monitoring combination, including the second candidate monitoring behavior, a third candidate monitoring behavior, and a fourth candidate monitoring behavior; a third monitoring combination, including the second candidate monitoring behavior, the third candidate monitoring behavior, the fourth candidate monitoring behavior, and a fifth candidate monitoring behavior; a fourth monitoring combination, including the third candidate monitoring behavior and the fourth candidate monitoring behavior; or a fifth monitoring combination, including the third candidate monitoring behavior, the fourth candidate monitoring behavior, and the fifth candidate monitoring behavior. The first candidate monitoring behavior indicates to perform PDCCH monitoring based on a configured search space set, the second candidate monitoring behavior indicates to stop PDCCH monitoring within preset duration, the third candidate monitoring behavior indicates to perform PDCCH monitoring based on a search space set in a first search space set group, the fourth candidate monitoring behavior indicates to perform PDCCH monitoring based on a search space set in a second search space set group, and the fifth candidate monitoring behavior indicates to perform PDCCH monitoring based on a search space set in a third search space set group.

When the first indication information for monitoring combination indicates the first monitoring combination, the second monitoring combination, or the third monitoring combination, the apparatus 700 further includes a third sending module 730, configured to send indication information of the preset duration to the terminal device.

In some embodiments, the first indication information for monitoring combination indicates a monitoring combination of a first bandwidth part BWP, and the first sending module 710 is further configured to send a second indication information for monitoring combination to the terminal device, where the second indication information for monitoring combination indicates a monitoring combination of a second BWP. Optionally, the monitoring combination of the first BWP is the same as the monitoring combination of the second BWP.

In some embodiments, the first indication information for monitoring combination indicates a monitoring combination of a first cell, and the first sending module 710 is further configured to send a third indication information for monitoring combination to the terminal device, where the third indication information for monitoring combination indicates a monitoring combination of a second cell. Optionally, the monitoring combination of the first cell is the same as the monitoring combination of the second cell.

As shown in FIG. 7, the apparatus 700 may further include a receiving module 740, configured to receive supported monitoring combination information from the terminal device, where the supported monitoring combination information indicates a monitoring combination supported by the terminal device, and a monitoring combination indicated by the first indication information for monitoring combination belongs to the monitoring combination supported by the terminal device.

In some embodiments, the monitoring behavior is used for a type 3 common search space set and a terminal device-specific search space set.

Division into modules or units in embodiments of this disclosure is an example, is merely logical function division, and may be another division manner during actual implementation. In addition, functional modules in embodiments of this disclosure may be integrated into one unit, or may exist alone physically, or two or more units are integrated into one unit. The integrated unit may be implemented in a form of hardware, or may be implemented in a form of a software functional unit.

The apparatus 700 in FIG. 7 can be configured to implement the foregoing processes performed by the network device 420 with reference to FIG. 5. For brevity, details are not described herein again.

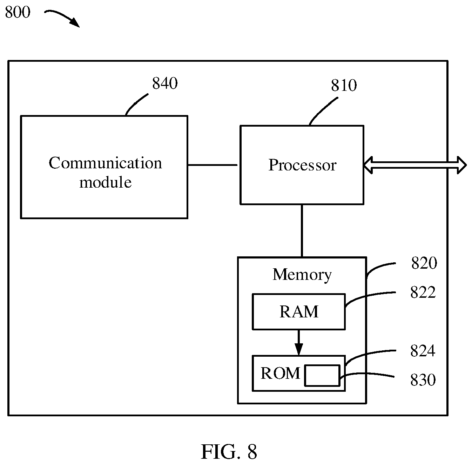

FIG. 8 is a schematic block diagram of an example device 800 that may be used to implement an embodiment of this disclosure. The device 800 may be implemented or included in the terminal device 410 in FIG. 4, or may be implemented or included in the network device 420 in FIG. 4. As shown in the figure, the device 800 includes one or more processors 810, one or more memories 820 coupled to the processor 810, and a communication module 840 coupled to the processor 810.

The communication module 840 may be configured for bidirectional communication. The communication module 840 may have at least one communication interface for communication. The communication interface may include any interface necessary for communicating with another device.

The processor 810 may be of any type suitable for a local technology network, and may include but is not limited to at least one of the following: one or more of a general-purpose computer, a dedicated computer, a microcontroller, a digital signal processor (Digital Signal Processor, DSP), or a controller-based multi-core controller architecture. The device 800 may have a plurality of processors, for example, an application-specific integrated circuit chip, which in time belongs to a clock synchronized with a main processor.

The memory 820 may include one or more non-volatile memories and one or more volatile memories. Examples of the non-volatile memory include but are not limited to at least one of the following: a read-only memory (Read-Only Memory, ROM) 824, an erasable programmable read-only memory (Erasable Programmable Read-Only Memory, EPROM), a flash memory, a hard disk, a compact disc (Compact Disc, CD), a digital versatile disc (Digital Versatile Disc, DVD) or other magnetic and/or optical storage. Examples of the volatile memory include but are not limited to at least one of the following: a random access memory (Random Access Memory, RAM) 822 or another volatile memory that does not last for power-off duration.

The computer program 830 includes computer-executable instructions executed by an association processor 810. A program 830 may be stored in the ROM 824. The processor 810 may perform any suitable action and processing by loading the program 830 into the RAM 822.

Embodiments of this disclosure may be implemented by using the program 830, to enable the device 800 to perform any process discussed with reference to FIG. 4 to FIG. 6. Embodiments of this disclosure may alternatively be implemented by using hardware or a combination of software and hardware.

The program 830 may be tangibly included in a computer-readable medium, and the computer-readable medium may be included in the device 800 (for example, in the memory 820) or another storage device that may be accessed by the device 800. The program 830 may be loaded from the computer-readable medium into the RAM 822 for execution. The computer-readable medium may include any type of tangible nonvolatile memory, such as a ROM, an EPROM, a flash memory, a hard disk, a CD, or a DVD.

In some embodiments, the communication module 840 in the device 800 may be implemented as a transmitter and a receiver (or a transceiver), and may be configured to send/receive information such as first indication information for monitoring combination and monitoring combination information supported by the terminal device. In addition, the device 800 may further include one or more of a scheduler, a controller, and a radio frequency/antenna. Details are not described in this disclosure.

For example, the device 800 in FIG. 8 may be implemented as an electronic device, or a chip or a chip system of the electronic device. This is not limited in embodiments of this disclosure.

An embodiment of this disclosure further provides a chip. The chip may include an input interface, an output interface, and a processing circuit. In this embodiment of this disclosure, the input interface and the output interface may be configured to complete signaling or data exchange, and the processing circuit may be configured to complete generating and processing of signaling or data information.

An embodiment of this disclosure further provides a chip system, including a processor, configured to support a computing device to implement a function in any one of the foregoing embodiments. In a possible design, the chip system may further include a memory. The memory is configured to store necessary program instructions and data. When the processor runs the program instructions, a device on which the chip system is installed is enabled to perform the method in any one of the foregoing embodiments. For example, the chip system may include one or more chips, or may include a chip and another discrete component.

An embodiment of this disclosure further provides a processor, configured to be coupled to a memory. The memory stores instructions, and when the processor runs the instructions, the processor is enabled to perform the method and function in any one of the foregoing embodiments.

An embodiment of this disclosure further provides a computer program product including instructions. When the computer program product runs on a computer, the computer is enabled to perform the method and function in any one of the foregoing embodiments.

An embodiment of this disclosure further provides a computer-readable storage medium, storing computer instructions. When a processor runs the instructions, the processor is enabled to perform the method and function in any one of the foregoing embodiments.

Generally, various embodiments of this disclosure may be implemented by hardware or a dedicated circuit, software, logic, or any combination thereof. Some aspects may be implemented by hardware, and other aspects may be implemented by firmware or software, and may be performed by a controller, a microprocessor, or another computing device. Although aspects of embodiments of this disclosure are shown and illustrated as block diagrams, flowcharts, or other diagrams, it should be understood that the blocks, apparatuses, systems, technologies, or methods described in this specification may be implemented as, for example, non-limiting examples, hardware, software, firmware, dedicated circuits, logic, general-purpose hardware, controllers, other computing devices, or a combination thereof.

This disclosure further provides at least one computer program product tangibly stored on a non-transitory computer-readable storage medium. The computer program product includes computer-executable instructions, for example instructions included in a program module, executed in a device on a real or virtual target processor to perform the process/method with reference to the accompanying drawings. Generally, the program module includes a routine, a program, a library, an object, a class, a component, a data structure, and the like that execute a particular task or implement a particular abstract data type. In various embodiments, functions of program modules may be combined or a function of a program module may be split as needed. Machine-executable instructions for the program module may be executed locally or within a distributed device. In the distributed device, the program modules may be located in local and remote storage media.

Computer program code used to implement the methods disclosed in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed all on a computer, partially on a computer, as an independent software package, partially on a computer and partially on a remote computer, or all on a remote computer or server.

In a context of this disclosure, the computer program code or related data may be carried by any appropriate carrier, so that a device, an apparatus, or a processor can perform various processing and operations described above. Examples of the carrier include a signal, a computer-readable medium, and the like. For example, the signal may include propagating signals in electrical, optical, radio, sound, or other forms, such as carrier waves and infrared signals.

The computer-readable medium may be any tangible medium that includes or stores a program used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus, or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any suitable combination thereof.

In addition, although the operations of the methods disclosed in this disclosure are described in a particular order in the accompanying drawings, this does not require or imply that these operations need to be performed in the particular order or that all of the shown operations need to be performed to achieve a desired result. Instead, execution orders of the steps depicted in the flowcharts may change. Addition or optionally, some steps may be omitted, a plurality of steps may be combined into one step for execution, and/or one step may be decomposed into a plurality of steps for execution. It should further be noted that features and functions of two or more apparatuses according to this disclosure may be specified in one apparatus. On the contrary, features and functions of one apparatus described above may be further divided into a plurality of apparatuses for materialization.

The implementations of this disclosure are described above. The foregoing descriptions are examples, are not exhaustive, and are not limited to the disclosed implementations. A plurality of modifications and variations are apparent to a person of ordinary skill in the art without departing from the scope and spirit of the described implementations. Selection of terms used in this specification is intended to well explain implementation principles, actual application, or improvements to technologies in the market, or to enable another person of ordinary skill in the art to understand the implementations disclosed in this specification.

## Claims

1. An information transmission method, comprising:
receiving, by a terminal device, first indication information for monitoring combination from a network device, wherein the first indication information for monitoring combination indicates at least two candidate monitoring behaviors;
receiving, by the terminal device, downlink control information DCI from the network device, wherein the DCI indicates a monitoring behavior of the terminal device, and the monitoring behavior is one of the at least two candidate monitoring behaviors; and
performing, by the terminal device, a downlink control channel PDCCH monitoring behavior based on the first indication information for monitoring combination and the DCI.

2. The method according to claim 1, wherein the receiving, by a terminal device, first indication information for monitoring combination from a network device comprises:
receiving, by the terminal device, the first indication information for monitoring combination from the network device, wherein the first indication information for monitoring combination indicates one of the following:
a first monitoring combination, comprising a first candidate monitoring behavior and a second candidate monitoring behavior;
a second monitoring combination, comprising the second candidate monitoring behavior, a third candidate monitoring behavior, and a fourth candidate monitoring behavior;
a third monitoring combination, comprising the second candidate monitoring behavior, the third candidate monitoring behavior, the fourth candidate monitoring behavior, and a fifth candidate monitoring behavior;
a fourth monitoring combination, comprising the third candidate monitoring behavior and the fourth candidate monitoring behavior; or
a fifth monitoring combination, comprising the third candidate monitoring behavior, the fourth candidate monitoring behavior, and the fifth candidate monitoring behavior, wherein
the first candidate monitoring behavior indicates to perform PDCCH monitoring based on a configured search space set, the second candidate monitoring behavior indicates to stop PDCCH monitoring within preset duration, the third candidate monitoring behavior indicates to perform PDCCH monitoring based on a search space set in a first search space set group, the fourth candidate monitoring behavior indicates to perform PDCCH monitoring based on a search space set in a second search space set group, and the fifth candidate monitoring behavior indicates to perform PDCCH monitoring based on a search space set in a third search space set group.

3. The method according to claim 2, wherein the first indication information for monitoring combination indicates the first monitoring combination, the second monitoring combination, or the third monitoring combination, and the method further comprises:
receiving, by the terminal device, indication information of the preset duration from the network device.

4. The method according to any one of claims 1 to 3, further comprising:
determining, by the terminal device, the monitoring behavior from the at least two candidate monitoring behaviors based on the DCI.

5. The method according to any one of claims 1 to 4, wherein the first indication information for monitoring combination indicates a monitoring combination of a first bandwidth part BWP, and the method further comprises:
receiving, by the terminal device, second indication information for monitoring combination from the network device, wherein the second indication information for monitoring combination indicates a monitoring combination of a second BWP.

6. The method according to claim 5, wherein the monitoring combination of the first BWP is the same as the monitoring combination of the second BWP.

7. The method according to any one of claims 1 to 4, wherein the first indication information for monitoring combination indicates a monitoring combination of a first cell, and the method further comprises:
receiving, by the terminal device, third indication information for monitoring combination from the network device, wherein the third indication information for monitoring combination indicates a monitoring combination of a second cell.

8. The method according to claim 7, wherein the monitoring combination of the first cell is the same as the monitoring combination of the second cell.

9. The method according to any one of claims 1 to 8, further comprising:
sending, by the terminal device, supported monitoring combination information to the network device, wherein the supported monitoring combination information indicates a monitoring combination supported by the terminal device.

10. The method according to any one of claims 1 to 9, wherein the monitoring behavior is used for a type 3 common search space set and a terminal device-specific search space set.

11. An information transmission method, comprising:
sending, by a network device, first indication information for monitoring combination to a terminal device, wherein the first indication information for monitoring combination indicates at least two candidate monitoring behaviors; and
sending, by the network device, downlink control information DCI to the terminal device, so that the terminal device performs a downlink control channel PDCCH monitoring behavior based on the first indication information for monitoring combination and the DCI, wherein the monitoring behavior is one of the at least two candidate monitoring behaviors.

12. The method according to claim 11, wherein the sending, by a network device, first indication information for monitoring combination to a terminal device comprises:
sending, by the network device, the first indication information for monitoring combination to the terminal device, wherein the first indication information for monitoring combination indicates one of the following:
a first monitoring combination, comprising a first candidate monitoring behavior and a second candidate monitoring behavior;
a second monitoring combination, comprising the second candidate monitoring behavior, a third candidate monitoring behavior, and a fourth candidate monitoring behavior;
a third monitoring combination, comprising the second candidate monitoring behavior, the third candidate monitoring behavior, the fourth candidate monitoring behavior, and a fifth candidate monitoring behavior;
a fourth monitoring combination, comprising the third candidate monitoring behavior and the fourth candidate monitoring behavior; or
a fifth monitoring combination, comprising the third candidate monitoring behavior, the fourth candidate monitoring behavior, and the fifth candidate monitoring behavior, wherein
the first candidate monitoring behavior indicates to perform PDCCH monitoring based on a configured search space set, the second candidate monitoring behavior indicates to stop PDCCH monitoring within preset duration, the third candidate monitoring behavior indicates to perform PDCCH monitoring based on a search space set in a first search space set group, the fourth candidate monitoring behavior indicates to perform PDCCH monitoring based on a search space set in a second search space set group, and the fifth candidate monitoring behavior indicates to perform PDCCH monitoring based on a search space set in a third search space set group.

13. The method according to claim 12, wherein the first indication information for monitoring combination indicates the first monitoring combination, the second monitoring combination, or the third monitoring combination, and the method further comprises:
sending, by the network device, indication information of the preset duration to the terminal device.

14. The method according to any one of claims 11 to 13, wherein the first indication information for monitoring combination indicates a monitoring combination of a first bandwidth part BWP, and the method further comprises:
sending, by the network device, second indication information for monitoring combination to the terminal device, wherein the second indication information for monitoring combination indicates a monitoring combination of a second BWP.

15. The method according to claim 14, wherein the monitoring combination of the first BWP is the same as the monitoring combination of the second BWP.

16. The method according to any one of claims 11 to 13, wherein the first indication information for monitoring combination indicates a monitoring combination of a first cell, and the method further comprises:
sending, by the network device, third indication information for monitoring combination to the terminal device, wherein the third indication information for monitoring combination indicates a monitoring combination of a second cell.

17. The method according to claim 16, wherein the monitoring combination of the first cell is the same as the monitoring combination of the second cell.

18. The method according to any one of claims 11 to 17, further comprising:
receiving, by the network device, supported monitoring combination information from the terminal device, wherein the supported monitoring combination information indicates a monitoring combination supported by the terminal device, and
a monitoring combination indicated by the first indication information for monitoring combination belongs to the monitoring combination supported by the terminal device.

19. The method according to any one of claims 11 to 18, wherein the monitoring behavior is used for a type 3 common search space set and a terminal device-specific search space set.

20. A communication apparatus, comprising:
a first receiving module, configured to receive first indication information for monitoring combination from a network device, wherein the first indication information for monitoring combination indicates at least two candidate monitoring behaviors;
a second receiving module, configured to receive downlink control information DCI from the network device, wherein the DCI indicates a monitoring behavior of the communication apparatus, and the monitoring behavior is one of the at least two candidate monitoring behaviors; and
an execution module, configured to perform a downlink control channel PDCCH monitoring behavior based on the first indication information for monitoring combination and the DCI.

21. The apparatus according to claim 20, wherein the first receiving module is configured to receive the first indication information for monitoring combination from the network device, and the first indication information for monitoring combination indicates one of the following:
a first monitoring combination, comprising a first candidate monitoring behavior and a second candidate monitoring behavior;
a second monitoring combination, comprising the second candidate monitoring behavior, a third candidate monitoring behavior, and a fourth candidate monitoring behavior;
a third monitoring combination, comprising the second candidate monitoring behavior, the third candidate monitoring behavior, the fourth candidate monitoring behavior, and a fifth candidate monitoring behavior;
a fourth monitoring combination, comprising the third candidate monitoring behavior and the fourth candidate monitoring behavior; or
a fifth monitoring combination, comprising the third candidate monitoring behavior, the fourth candidate monitoring behavior, and the fifth candidate monitoring behavior, wherein
the first candidate monitoring behavior indicates to perform PDCCH monitoring based on a configured search space set, the second candidate monitoring behavior indicates to stop PDCCH monitoring within preset duration, the third candidate monitoring behavior indicates to perform PDCCH monitoring based on a search space set in a first search space set group, the fourth candidate monitoring behavior indicates to perform PDCCH monitoring based on a search space set in a second search space set group, and the fifth candidate monitoring behavior indicates to perform PDCCH monitoring based on a search space set in a third search space set group.

22. The apparatus according to claim 21, wherein the first indication information for monitoring combination indicates the first monitoring combination, the second monitoring combination, or the third monitoring combination, and the apparatus further comprises a third receiving module, configured to:
receive indication information of the preset duration from the network device.

23. The apparatus according to any one of claims 20 to 22, further comprising a determining module, configured to:
determine the monitoring behavior from the at least two candidate monitoring behaviors based on the DCI.

24. The apparatus according to any one of claims 10 to 23, wherein the first indication information for monitoring combination indicates a monitoring combination of a first bandwidth part BWP, and the first receiving module is further configured to:
receive second indication information for monitoring combination from the network device, wherein the second indication information for monitoring combination indicates a monitoring combination of a second BWP.

25. The apparatus according to claim 24, wherein the monitoring combination of the first BWP is the same as the monitoring combination of the second BWP.

26. The apparatus according to any one of claims 20 to 23, wherein the first indication information for monitoring combination indicates a monitoring combination of a first cell, and the first receiving module is further configured to:
receive third indication information for monitoring combination from the network device, wherein the third indication information for monitoring combination indicates a monitoring combination of a second cell.

27. The apparatus according to claim 26, wherein the monitoring combination of the first cell is the same as the monitoring combination of the second cell.

28. The apparatus according to any one of claims 20 to 27, further comprising a sending module, configured to:
send supported monitoring combination information to the network device, wherein the supported monitoring combination information indicates a monitoring combination supported by the communication apparatus.

29. The apparatus according to any one of claims 20 to 28, wherein the monitoring behavior is used for a type 3 common search space set and a terminal device-specific search space set.

30. A communication apparatus, comprising:
a first sending module, configured to send first indication information for monitoring combination to a terminal device, wherein the first indication information for monitoring combination indicates at least two candidate monitoring behaviors; and
a second sending module, configured to send downlink control information DCI to the terminal device, so that the terminal device performs a downlink control channel PDCCH monitoring behavior based on the first indication information for monitoring combination and the DCI, wherein the monitoring behavior is one of the at least two candidate monitoring behaviors.

31. The apparatus according to claim 30, wherein the first sending module is configured to send the first indication information for monitoring combination to the terminal device, and the first indication information for monitoring combination indicates one of the following:
a first monitoring combination, comprising a first candidate monitoring behavior and a second candidate monitoring behavior;
a second monitoring combination, comprising the second candidate monitoring behavior, a third candidate monitoring behavior, and a fourth candidate monitoring behavior;
a third monitoring combination, comprising the second candidate monitoring behavior, the third candidate monitoring behavior, the fourth candidate monitoring behavior, and a fifth candidate monitoring behavior;
a fourth monitoring combination, comprising the third candidate monitoring behavior and the fourth candidate monitoring behavior; or
a fifth monitoring combination, comprising the third candidate monitoring behavior, the fourth candidate monitoring behavior, and the fifth candidate monitoring behavior, wherein
the first candidate monitoring behavior indicates to perform PDCCH monitoring based on a configured search space set, the second candidate monitoring behavior indicates to stop PDCCH monitoring within preset duration, the third candidate monitoring behavior indicates to perform PDCCH monitoring based on a search space set in a first search space set group, the fourth candidate monitoring behavior indicates to perform PDCCH monitoring based on a search space set in a second search space set group, and the fifth candidate monitoring behavior indicates to perform PDCCH monitoring based on a search space set in a third search space set group.

32. The apparatus according to claim 31, wherein the first indication information for monitoring combination indicates the first monitoring combination, the second monitoring combination, or the third monitoring combination, and the apparatus further comprises a third sending module, configured to:
send indication information of the preset duration to the terminal device.

33. The apparatus according to any one of claims 30 to 32, wherein the first indication information for monitoring combination indicates a monitoring combination of a first bandwidth part BWP, and the first sending module is further configured to:
send second indication information for monitoring combination to the terminal device, wherein the second indication information for monitoring combination indicates a monitoring combination of a second BWP.

34. The apparatus according to claim 33, wherein the monitoring combination of the first BWP is the same as the monitoring combination of the second BWP.

35. The apparatus according to any one of claims 30 to 32, wherein the first indication information for monitoring combination indicates a monitoring combination of a first cell, and the first sending module is further configured to:
send third indication information for monitoring combination to the terminal device, wherein the third indication information for monitoring combination indicates a monitoring combination of a second cell.

36. The apparatus according to claim 35, wherein the monitoring combination of the first cell is the same as the monitoring combination of the second cell.

37. The apparatus according to any one of claims 30 to 36, further comprising a receiving module, configured to:
receive supported monitoring combination information from the terminal device, wherein the supported monitoring combination information indicates a monitoring combination supported by the terminal device, and
a monitoring combination indicated by the first indication information for monitoring combination belongs to the monitoring combination supported by the terminal device.

38. The apparatus according to any one of claims 30 to 36, wherein the monitoring behavior is used for a type 3 common search space set and a terminal device-specific search space set.

39. A computer-readable storage medium, wherein the computer-readable storage medium stores computer-executable instructions, and when the computer-executable instructions are executed by a processor, the method according to any one of claims 1 to 19 is implemented.

40. A computer program product, wherein the computer program product comprises computer-executable instructions, and when the computer-executable instructions are executed, the method according to any one of claims 1 to 19 is implemented.

41. A chip, comprising a processing circuit configured to perform the method according to any one of claims 1 to 19.
